(19) Europäisches Patentamt
European Patent Office
Office européen des brevets

(11) Publication number: 0 265 857 B1

(12) # EUROPEAN PATENT SPECIFICATION

(45) Date of publication of the patent specification: 19.09.90

(51) Int. Cl.[5]: C09B 62/507, D06P 1/384

(21) Application number: 87115541.2

(22) Date of filing: 23.10.87

(54) **Water-soluble monoazodyes containing a ureido group and two sulfonyl fiber-reactive groups, process for their preparation and their use.**

(30) Priority: 27.10.86 US 923356

(43) Date of publication of application: 04.05.88 Bulletin 88/18

(45) Publication of the grant of the patent: 19.09.90 Bulletin 90/38

(84) Designated Contracting States: BE CH DE FR GB IT LI

(56) References cited:
BE-A- 670 089
GB-A- 913 517

The file contains technical information submitted after the application was filed and not included in this specification

(73) Proprietor: HOECHST CELANESE CORPORATION, Route 202-206 North, Somerville, N.J. 08876(US)

(72) Inventor: Thompson, Glenn A., Lawton Forster Road, Hopkinton, RI 02833(US)
Inventor: Corso, Anthony J., 5 Crocus Court, Coventry, RI 02816(US)
Inventor: Steuernagel, Hans Helmut, Dr., An den Römergärten 1, D-6233 Kelkheim (Taunus)(DE)

(74) Representative: Kockläuner, Reinhard, Dr. et al, HOECHST AKTIENGESELLSCHAFT Zentrale Patentabteilung Postfach 80 03 20, D-6230 Frankfurt am Main 80(DE)

EP 0 265 857 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Water-soluble monoazo dyes containing a ureido group and two sulfonyl fiber-reactive groups, process for their preparation and their use

This invention is directed to the field of water-soluble, fiber-reactive monoazo dyes.

From U.S. Patent Specifications Nos. 3,419,542 and 3,518,245 monoazo dyes containing a ureido group and their metal complexes are known, these compounds having one reactive sulfonyl group substituted on a phenyl group which is linked to the naphthalene coupler by a ureido group (i.e., coupler-ureido-phenyl-reactive group).

US-PS 3,655,642 and EP-A-107,614 disclose monoazo dyes with two reactive sulfonyl groups, both of which are substituted on the diazo component. Also known are disazo dyes (see US-PS 2,657,205 and US-PS 3,364,194) which contain two diazo moieties and two reactive groups; such disazo dyes are limited in that they do not produce a full range of shades, only blue and brown. US-PS 3,519,616 discloses water-soluble, fiber-reactive monoazo dyes with two reactive sulfonyl groups, one of each being linked to the coupler and one to the diazo component. No specific example is disclosed but at Column 3, illustrative couplers and diazo components are given in which certain examples of each contain a fiber-reactive group. The fiber-reactive groups, however, are not separated from the chromophore by a non-chromophoric insulating group. Similarly, U.S. Patent Specification No. 4,139,527 discloses certain fiber-reactive monoazo dyes containing one or two acid monoesters but as in the above-mentioned US-PS 3,519,616, British Patent Specification 913 517 discloses a page 4 Ex 7 a dye having two reactive groups, one amide group and one azo group, none of these reactive groups are separated from the chromophore by an insulating ureido group. Furthermore, US-PS 3,223,470 discloses monoazo dyes containing one fiber-reactive sulfonyl group and one fiber-reactive chlorotriazine group. These dyes are not stable in acidic environment and are not readily discharged in printing applications.

The invention now provides improved, valuable new monoazo dyes and their metal complexes. These dyes in their metalfree form correspond to the general formula (1):

$$X-SO_2-A-N=N-W-\underset{\displaystyle R}{\underset{|}{N}}-CO-NH-Z-SO_2-Y \qquad (1)$$

wherein:

X and Y are independently selected from vinyl, β-thiosulfatoethyl, β-bromoethyl, β-acetyloxyethyl, β-hydroxyethyl, β-phosphatoethyl, β-methylsulfonyloxyethyl, β-phenoxyethyl, β-sulfatoethyl, β-chloroethyl, β-phenylsulfonyloxy-ethyl and a group of the formula $-CH_2-CH_2-NR^1R^2$, in which $R^1$ and $R^2$ are independently selected from hydrogen, alkyl of 1 to 4 carbon atoms and sulfo-substituted alkyl of 1 to 4 carbon atoms;

R is hydrogen, alkyl of 1 to 4 carbon atoms or sulfo-substituted alkyl of 1 to 4 carbon atoms;

A is a phenylene or naphthylene radical optionally substituted with hydroxy, halogen, alkyl of 1 to 4 carbon atoms, alkoxy of 1 to 4 carbon atoms, carboxy and/or sulfo;

W is a phenylene or naphthylene radical optionally substituted with carboxy, sulfo, amino, carbamoyl unsubstituted or mono- or disubsituted by alkyl of 1 to 4 carbon atoms, phenyl and/or phenyl-(alkyl of 1 to 4 carbon atoms), sulfamoyl unsubstituted or mono- or disubstituted by alkyl of 1 to 4 carbon atoms, phenyl and/or phenyl-alkyl of 1 to 4 carbon atoms), alkyl of 1 to 4 carbon atoms, alkoxy of 1 to 4 carbon atoms, hydroxy and/or halogen, the hydroxy or amino group of which, if present, are bonded at W in the ortho- or para-position relative to the azo group;

Z is a phenylene radical optionally substituted with halogen, alkoxy of 1 to 4 carbon atoms and/or alkyl of 1 to 4 carbon atoms.

Compounds of formula (1) in which W is an optionally substituted naphthalene radical, are preferred.

An embodiment of the invention are those dyestuffs of formula (1) wherein either the hydroxy group or the amino group, as a substituent to W, is mandatorily present and the hydroxy group is in the ortho-position, relative to the azo group, if W is naphthylene, or in the ortho- or para-position if W is phenylene, and the amino group is in the ortho- or para-position of W, relative to the azo group.

A further embodiment of the invention are those dyestuffs of formula (1) wherein:

A is phenylene unsubstituted or substituted with 1 or 2 substituents selected from the group consisting of hydroxy, halogen, alkyl of 1 to 4 carbon atoms, alkoxy of 1 to 4 carbon atoms, carboxy and sulfo, and

W is phenylene unsubstituted or substituted with 1 or 2 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1to 4 carbon atoms, phenyl or phenyl-(alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if

present, preferably mandatorily present, is in the ortho- or para-position relative to the azo group,

or wherein:

A is phenylene unsubstituted or substituted with 1 or 2 substituents selected from the group consisting of hydroxy, halogen, alkyl of 1 to 4 carbon atoms, alkoxy of 1 to 4 carbon atoms, carboxy and sulfo, and

W is naphthylene unsubstituted or substituted with 1, 2 or 3 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms) carbamoyl mono- or disubstituted by alkyl of 1 to 4 carbon atoms, phenyl or phenyl(alkyl of 1 to 4 carbon atoms), amino, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group,

or wherein:

A is naphthylene unsubstituted or substituted with 1, 2 or 3 substituents selected from the group of substituents consisting of hydroxy, halogen, alkyl of 1 to 4 carbon atoms, alkoxy of 1 to 4 carbon atoms, carboxy and sulfo, and

W is phenylene unsubstituted or substituted with 1 or 2 substitutents selected from the group of substituents consisting of sulfo, sulfamoyl, carbamoyl, sulfamoyl mono- or disubstituted by alkyl of 1 to 4 carbon atoms, phenyl or phenyl-alkyl of 1 to 4 carbon atoms), carbamoyl mono- or disubstituted by alkyl of 1 to 4 carbon atoms, phenyl or phenyl-alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group,

or wherein:

A is naphthylene unsubstituted or substituted with 1, 2 or 3 substituents selected from the group consisting of hydroxy, halogen, alkyl of 1 to 4 carbon atoms, alkoxy of 1 to 4 carbon atoms, carboxy and sulfo, and

W is naphthylene unsubstituted or substituted with 1, 2 or 3 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1 to 4 carbon atoms, phenyl or phenyl(alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group.

A preferred embodiment of the invention are dyestuffs according to the general formula (1a)

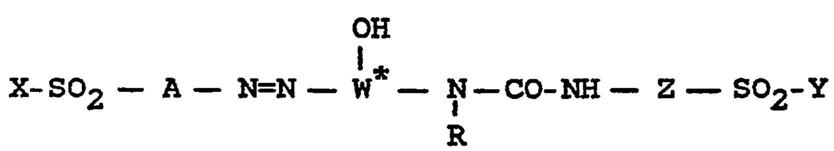

(1a)

in which X, R, Z and Y are defined as above and A is a phenylene group unsubstituted or substituted with substituents independently selected from halogen (such as chlorine and bromine), alkyl of 1 to 4 carbon atoms, alkoxy of 1 to 4 carbon atoms, carboxy and sulfo, or is a naphthylene group unsubstituted or substituted by sulfo, and is a naphthalene ring the hydroxy group of which is in the ortho-position relative to the azo group, and is substituted by one or two sulfo groups.

A further preferred embodiment of the invention, concerning the metal-complex dyestuffs, are dyestuffs according to general formula (1b)

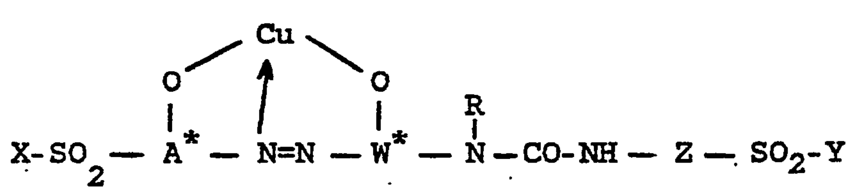

(1b)

in which X, R, Z and Y are defined as above and A* is a benzene or naphthalene ring each of which is unsubstituted or substituted with substituents independently selected from halogen, alkyl of 1 to 4 carbon atoms, alkoxy of 1 to 4 carbon atoms, carboxy and sulfo, and the oxy group which forms the metal-complex, is bonded to A* in the ortho-position relative to the azo group, and is a naphthalene ring which is substituted by one or two sulfo groups, and the oxy group which forms the metal-complex is bonded to W*

in the ortho-position relative to the azo group.

As used in this description, lower alkyl or lower alkoxy means a 1 to 4 carbon atom moiety.

The present invention also concerns processes for the preparation of the novel dyes.

The metal-free dyes are advantageously prepared by diazotization of an amino compound of the general formula (2)

$X–SO_2–A–NH_2$ (2)

in which A and X are defined as above, and reacting the diazonium salt with a coupling compound of the general formula (3)

$$H - W^1 - \underset{R}{\underset{|}{N}} - CO - NH - Z - SO_2 - Y \qquad (3)$$

wherein $W^1$ has one of the meanings of W and is mandatorily substituted by an amino or hydroxy group, and R, Z and Y are defined as previously stated.

The metal complexes of the dyes of the general formula (1) can be prepared if the dye contains in the ortho positions to the azo group a substituent capable of forming a metal complex or of being capable of being converted to such a group, e.g. a hydroxy, carboxy or alkoxy group, by reacting with a copper-, nickel-, chromium- or cobalt-yielding, preferably copper-yielding, agent.

The synthesis of the dyes according to the invention can principally be carried out analogously to known methods for diazotization of aromatic amino compounds and coupling the diazonium salts with a compound which is capable of coupling, and methods which convert azo compounds to the metal-complex compounds by reacting with metal-yielding agents, such as salts of those metals, optionally in the presence of an oxidizing agent, such as hydrogen peroxide, and/or under the action of heat, such as at a temperature of 60 to 110°C, in preferably aqueous medium. The diazotization reaction is usually carried out in aqueous solution at a pH of 0 to 2 and at a temperature of -5°C to 15°C. The coupling reactions can be carried out under conventional conditions for the preparation of fiber-reactive azo compounds, in particular in an aqueous medium and at a temperature between 0 and 50°C, preferably between 5 and 20°C, and at a pH-value between 2 and 8, preferably between 4 and 7.

The dyestuffs according to the invention, in particular those which contain no hydroxy or amino group as a substituent to W and contain the fibre-reactive group of the formula (3a)

$$- \underset{R}{\underset{|}{N}} - CO - NH - Z - SO_2 - Y \qquad (3a)$$

bonded in the para-position to the azo group, can also be prepared according to invention by reacting an amino-azo compound of the general formula (6)

$$X - SO_2 - A - N = N - W - \underset{R}{\underset{|}{N}} - H \qquad (6)$$

or a metal-complex compound thereof,

in which X, A, W and R are defined as above, with an aromatic isocyanate of the general formula (4)

$Y — SO_2 — Z — NCO$ (4)

in which Y and Z are defined as above,

or with an aromatic carbamic acid derivative of general formula (5)

$Y — SO_2 — Z — NH — CO — B$ (5)

wherein B is a chlorine atom or a phenoxy group and Z and Y are defined as above. The reaction of the isocyanate compounds of formula (4) or of the carbamic acid derivatives of the formula (5) with these amino-azo starting compounds are carried out in solution or suspension or in emulsion at a temperature of from 0 to 70°C in an weakly acid to weakly alkaline medium, such as at a pH between 4.5 and 8, preferably between 5 and 7. Solvents (diluents) as reaction medium are preferably water or mixtures or emulsions of water with organic solvents (diluents), such as benzene, toluene, chlorobenzene, o-dichlorobenzene and acetone. The reactions of the isocyanates of formula (4) with these amino-azo compounds are carried out preferably at a temperature of from 0 to 40°C, and of the carbamic acid derivatives of formula (5) with these amino-azo compounds preferably at a temperature between 30 and 70°C. The reaction components can be employed as such, for example, in form of a powder, optionally with the addition of a conventional emulsifying agent, or dissolved in a suitable solvent.

Amino compounds of the general formula (2) are for example: 1-amino-phenyl-2- or -3- or 4-(β-sulfatoethyl) sulfone; 1-amino-2-carboxy-phenyl-5-(β-sulfatoethyl) sulfone; 1-amino-2-chloro-phenyl-3- or 4-(β-sulfatoethyl) sulfone; 1-amino-2-ethoxy-phenyl-4- or -5-(β-sulfatoethyl) sulfone; 1-amino-2-ethylphenyl-4-(β-sulfatoethyl) sulfone; 1-amino-2-methoxy-phenyl-5-(β-sulfatoethyl) sulfone; 1-amino-2,4-diethoxy-phenyl-5-(β-sulfatoethyl) sulfone; 1-amino-2,4-dimethoxy-phenyl-5-(β-sulfatoethyl) sulfone; 1-

amino-2,5-dimethoxy-phenyl-4-(β-sulfatoethyl) sulfone; 1-amino-2-methoxy-5-methyl-phenyl-4-(β-sulfatoethyl) sulfone; 1-amino-phenyl-2- or -3- or -4-(β-thiosulfatoethyl) sulfone; 1-amino-2-methoxy-phenyl-5-(β-thiosulfatoethyl) sulfone; 1-amino-2-sulfophenyl-4-(β-phosphatoethyl) sulfone; 1-amino-2-sulfo-phenyl-4-vinyl sulfone; 1-amino-2-hydroxy-phenyl-4- or -5-(β-sulfatoethyl) sulfone; 1-amino-2-hydroxy-3-sulfo-phenyl-5-(β-sulfatoethyl) sulfone; 1-amino-2-chloro-phenyl-4- or -5-(β-chlorethyl) sulfone; 1-amino-phenyl-3- or -4-(β-acetoxyethyl) sulfone; 1-amino-2-methoxy-phenyl-4-[β-(N-methyltaurine)-ethyl]-sulfone; 2-amino-5- or -6- or -7- or -8-(β-sulfatoethylsulfonyl)-naphthalene; 2-amino-6-(β-sulfatoethylsulfonyl)-naphthalene-1-sulfonic acid; 2-amino-5-(β-sulfatoethylsulfonyl)-naphthalene-1-sulfonic acid; 2-amino-8-(β-sulfatoethylsulfonyl)-naphthalene-6-sulfonic acid.

Couplers of general formula (3) are conveniently produced by the condensation of an aromatic isocyanate of general formula (4) or an aromatic carbamic acid derivative of the general formula (5), both defined above, with an aromatic amine of the general formula (7)

$H-W^1-NH-R$ (7)

wherein R and $W^1$ are defined as above, preferably under the conditions as mentioned above for the reaction of the compounds of formulae (4) and (5) with the amino-azo compounds of formula (6).

The following isocyanates of general formula (4) are examples which may be used in this invention:

3- or -4-(β-chloroethylsulfonyl)-phenyl-isocyanate, 2-methoxy-5-(β-chloroethylsulfonyl)-phenyl-isocyanate, 3- or -4-(β-acetoxyethylsulfonyl)-phenyl-isocyanate, 3- or -4-(β-phenoxyethylsulfonyl)-phenyl isocyanate, 2,5-dimethoxy-4-(β-chloroethylsulfonyl)-phenyl-isocyanate, 3- or -4-vinylsulfonyl-phenyl-isocyanate and 2-chloro-3-or -4- (β-chloroethylsulfonyl)-phenyl isocyanate.

The following compounds are examples of carbamic acid derivates of formula (5) that may be used in this invention:

N-[4-(β-sulfatoethylsulfonyl)-phenyl]-carbamic acid phenyl ester, N-[4-(β-phosphatoethylsulfonyl)-phenyl]-carbamic acid phenyl ester, N-[2-methoxy-5-(β-sulfatoethylsulfonyl)-phenyl]-carbamic acid phenyl ester and N-[2-chloro-4-(β-sulfatoethylsulfonyl)-phenyl]-carbamic acid phenyl ester.

The following compounds are examples of couplers of formula (7) that can be condensed with the substituted aromatic isocyanates or carbamic acid derivatives of general formula (4) and (5):

2-sulfo-5-acetamino-aniline, 3-bromo-aniline, 3-chloro-aniline, 3-methyl-aniline, 3-ethyl-aniline, 3-carbonamidoethyl-6-methoxy-aniline, 2,5-dimethoxy-aniline, preferably 2-amino-8-hydroxy-naphthalene-6-sulfonic acid, 3-amino-8-hydroxy-naphthalene-6-sulfonic acid, 1-amino-8-hydroxy-naphthalene-4-sulfonic acid, 1-amino-8-hydroxy-naphthalene-3,6-sulfonic acid, 1-amino-8-hydroxy-naphthalene-4,6-disulfonic acid, 2-amino-5-hydroxy-naphthalene-1,7-disulfonic acid, 1-amino-5-hydroxy-naphthalene-7-sulfonic acid, 1-amino-5-hydroxy-naphthalene-3,7-disulfonic acid, and N-(lower alkyl) derivatives of these compounds such as 2-(N-methylamino)-8-hydroxy-naphthalene-3,6-disulfonic acid.

The metal complexes of the dyes of general formula (1) can be prepared by known methods from the o,o'-dihydroxy-azo dye derivative by reacting with a metal-yielding agent, or by treating an o'-hydroxy-azo dye which contains a hydrogen atom in the ortho-position to the azo group, with a metal or metal-yielding agent and an oxidizing agent, such as hydrogen peroxide, in a weakly acid solution. For instance, US-PS 4,400,317 describes a method of preparing the metal complex by treating with non-salt forming metals. The metal complexes dyes of the invention may contain one complexed metal atom to one dye molecule or one metal atom to two dye molecules. In the case of chromium or cobalt complexes the ratio of metal atoms to dye molecules is preferably 1:2, and in the case of copper and nickel the ratio is 1:1.

The fiber-reactive sulfonyl groups $X-SO_2-$ and $Y-SO_2-$are well known in the art. In practice the reactive moiety is either the vinyl sulfonyl group or a moiety that can be converted to vinyl sulfonyl by treatment with an alkaline agent. Preferably, the fiber-reactive sulfonyl group is the β-sulfatoethylsulfonyl group. More preferably, it has been found that the fiber-reactive sulfonyl groups have different reactivity, e.g. $X-SO_2-$ being the β-sulfatoethylsulfonyl moiety and $Y-SO_2-$ being the β-chloroethylsulfonyl moiety.

The azo compounds of this invention can be used in the form of their free acids as well as in the form of their salts. They are preferably used in the form of salts, preferably the alkali metal salts, for coloring (dyeing and printing) materials, in particular fiberous materials containing hydroxy groups and/or amido groups. In addition, the compounds of this invention show surprisingly superior color fixation properties even if the fiber-reactive moiety is prematurely converted to the vinyl moiety in the commercial dyeing operation, and they are particularly resistant to hydrolysis in the chemical-pad-steam (C.P.S).

The dyes of general formula (1) containing two sulfonyl fiber-reactive groups $-SO_2X$ and $-SO_2Y$ positioned on opposite sides of the dye molecule with the group Y being separated from the chromophore by a ureido group, provide practically a full range of colors from golden yellow to blue and adapted to be chemically bonded at each end of the molecule to a substrate. Although dyes containing a single sulfonyl-reactive group exhibit high colour yield loss with increasing dyeing temperature, the dyes of this invention do not. This advantage is unexpected and provides a means to obtain better leveling of the colour by the use of high temperature, exhaust dyeing techniques. High dyeing temperatures effects dissolution of waxes from the fabric and the ability to withstand high temperature without color loss makes the dyes of this invention particularly suited for one-pot processing of unscoured fabrics with the attendant advantages of reduced dyeing time and effluent.

In chemical pad steam (C.P.S.) dyeings, the new dyes of the invention build strongly with high fixation.

The percent fixation is equivalent or superior to that of dyes containing mixed monochlorotriazine/sulfonyl reactive groups. It has been found that each sulfonyl reactive group of the dyes of the invention contribute approximately equally to the dye fixation value. In contrast, the monochlorotriazine group of the mixed triazine/sulfonyl dyes contributes only about 15 % (see: Dyes and Pigments, Vol. 3, page 290 (1982)).

Additional advantages of the dyes of this invention are:

(1) stability in acidic environment - mixed triazines/sulfonyl dyes hydrolyze resulting in color loss on washing after storage in acidic environments,

(2) the sulfonyl reactive group is dischargeable whereas the triazine group is not,

(3) the double sulfonyl reactive group dyes of the invention are more hydrolysis resistant in alkali medium than the mixed triazine/sulfonyl or single sulfonyl dyes group;

(4) colour loss and/or colour change due to thermal cracking is reduced by double anchoring of the dye to fiber and insulating the chromophore from the second sulfonyl reative group by the ureido group, i.e. no or little colours loss occur if the dye thermally cracks because the chromophore remains attached to the fiber;

(5) these dyes may be prepared as liquid compositions which exhibit excellent long term storage stability; which is particularly useful in C.P.S. dyeing applications.

The compounds of formula (1) can be separated from the reaction medium after their preparation, by known methods suitable for water-soluble compounds, such as, by precipitation from the reaction medium with electrolytes, such as, sodium chloride or potassium chloride, or by evaporation of the reaction medium, for example by spray-drying. When the latter method for isolation is chosen, it can be advantageous to remove sulfates if they are present in the synthesis solutions, before evaporation. This can be done by precipitation of the sulfates as calcium sulfate and filtration. In some cases, it is also possible for the solution obtained in the synthesis to be used directly, after standardization with water, as a liquid dyestuff composition. These liquid dyestuff compositions, especially useful in chemical pad steam applications, show no chemical or physical changes on long term storage.

The compounds according to formula (1) are suitable, as water-soluble dyestuffs, for coloring (dyeing and printing) of fibers, leather or other materials containing hydroxy groups and/or amido groups. Exemplary materials are natural, regenerated or synthetic, nitrogen-containing fibers and natural, regenerated or synthetic hydroxy group containing fibers. The dyestuffs according to the invention are capable of colouring these materials to deep, brilliant shades ranging from golden yellow to blue with superior fastness properties. The fiber-reactive groups in the compounds of the invention can react with the amido and hydroxy groups of the material, such as a cotton containing hydroxy groups, to form a covalent bond and thus form a bonded links with the fiber.

The present invention also relates to the use of the compounds of formula (1) for colouring (such as dyeing and printing) such materials and to a process for colouring such material which comprises contacting a compound of formula (1), preferably in the form of an aqueous solution with the material, and fixing the compound of formula (1) on it optionally under the action of an alkaline agent and/or heat.

Typical nitrogen-containing synthetic materials useful in this invention are polyurethanes and polyamides such as nylon 6, nylon 6/6 and nylon 11. Typical natural polyamide materials are silk and wool and other animal hair products. Typical materials containing hydroxy groups are polyvinyl alcohols, cellulosic materials such as cotton, other vegetable fibers, such as linen, hemp, jute, and their regenerated products, such as viscose rayon or cuprammonium rayon.

The novel compounds of formula (1) can be applied by the known application techniques for fiber-reactive dyestuffs. In general, a procedure is followed in which an aqueous solution of the compounds of the formula (1) or their metal complex are applied to the materials, optionally in the presence of a thickener and/or other auxiliaries to improve the affinity, leveling and migration properties. After application the dyestuff is then fixed to the fiber.

The compounds of the formula (1) are applied to natural or regenerated or synthetic polyamide fibers or polyurethane fibers or to leather by conventional techniques from an aqueous acid to aqueous neutral solution (pH range from about 3 to 6.5), usually by the exhaustion method, and are fixed on these fibers by the application of heat at a temperature between 60 and 130°C. It is possible for example to add acetic acid or acetic and ammonium acetate as a buffer to the bath containing the compound of the general formula (1) in order to obtain the desired pH value. Addition of leveling agents, for example those based on a reaction product of cyanuric chloride with three moles of an aminobenzenesulfonic acid and/or amino-naphthalenesulfonic acid or those based on a reaction product of stearylamine and ethylene oxide, can be used for the purpose of achieving level dyeings. The compounds of formula (1) can be applied and fixed on the material by the exhaustion process either at the boiling point or at a higher temperature, for example, at 105 to 120°C, under pressure. It is expedient for the dyeing to be started with a slow increase in temperature to 60°C and, after some time, for the temperature to be increased slowly to a higher temperature.

In the colouring of fiber materials containing hydroxy groups, the compound of formula (1) is general applied to the fiber from a weakly acid to alkaline solution and fixed on the fiber by an alkaline agent subsequently added to the dye bath or applied directly to the fiber. Typical alkaline substances which can be used in these fixing solutions are sodium hydroxide, sodium carbonate, sodium bicarbonate, potassium hydroxide, potassium carbonate, trisodium phosphate or sodium or potassium silicate or waterglass. The dyestuffs can be applied by exhaustion dyeing procedures or the chemical pad steam process. In the exhaust method, the fiber material is treated in an aqueous-alkaline solution of the compound of the formula (1), preferably in the presence of an electrolyte, such as sodium chloride or sodium sulfate, at an elevated temperature between 30 and 130°C. It is preferable for the dyeing to be started at a low temperature and for the temperature of the exhaustion bath to be slowly increased to about 60°C to 130°C, and completing the fixation step in this temperature range.

In the chemical pad steam (C.P.S.) method, the fabric is continuously passed through a dyebath, dried, passed through an alkaline chamical pad, fixed by steaming, washed and dried. Fiber reactive dyes of formula (1) perform excellently in this application. The new dyes exhibit excellent fixation, thereby reducing waste and waste treatment. They are less susceptible to hydrolysis during steaming than dyes containing one sulfonyl reactive group. The new dyes of formula (1) are less sensitive to alkali variations, particularly increasing alkali, in the C.P.S. when compared to dyes containing one sulfonyl reactive group. Liquid dyestuff compositions, preferred by dyehouses using C.P.S., exhibit improved chemical stability on storage when compared to dyes containing a monochlorotriazine group. The monochlorotriazine group hydrolyzes at pH of from 2.5 to 4.5, and rapidly below pH 3, thus requiring large amounts of buffer to absorb the acidity generated. Dyes of formula (1) are stable at a pH of 2.5 to 4.5. At high pH, the dyes of formula (1) vinylize, but surprisingly no loss of colour strength in C.P.S. dyeing is observed.

If the compounds of formula (1) are applied to the fiber material in the form of printing pastes, it is usual to employ thickeners, such as sodium alginate, cellulose ether, tragacanth or gum arabic, optionally with the addition of a printing auxiliary and an alkaline compound. These prints are then treated with hot air at a temperature between 70 and 230°C, preferably between 100 and 150°C (thermofixed), or steamed. The compounds of formula (1) can be applied to the fiber by customary printing processes such as a one-step procedure using a printing paste of the dyestuff containing sodium bicarbonate or one of the other alkaline agents with subsequent fixation of the compound of formula (1) by steaming at 101 to 103°C. They also can be applied to the fiber by a two-step process of applying a neutral or weakly acid printing paste of the dyestuff and then fixing it either by passing the printed material through a hot alkaline bath containing electrolytes. Alternatively, it can be overpadded with an alkaline liquor containing electrolytes and left to stand at room temperature but usually it is treated with heat using hot steam or hot air. If an electrolyte-containing alkaline bath is used for fixing, the bath temperature is 60 to 105°C, so that subsequent treatment by hot air or steam can be eliminated.

If the material is impregnated with the compound of the invention and treated with a strong aqueous alkali, (e.g. sodium hydroxide or potassium hydroxide and/or sodium silicate or potassium silicate or trisodium phosphate) it is sufficient for the moist goods (usually prints) to be left to stand at room temperature for a relatively long period to fix the dyestuff. The colored materials thus obtained are then after-treated, rinsed and dried, in the usual manner.

Coloured fiber materials on which the compounds of the invention have been fixed, have very good wet fastness properties. They show strong, shades from golden yellow to blue, outstanding wet fastness properties, in particular, fastness to washing at 60 to 95°C, to alkaline and acid perspiration, to water and to bleaching with sodium chlorite and chlorinated water. In particular, they have, in the dry and moist state, good fastness to light. The compounds of formula (1) have a very good affinity and exhibit a high degree of fixation (high tinctorial strength).

They fix on mixed fiber materials (e.g. cotton/viscose staple mixed fabric) in the same intensity and produce uniform shade and depth of colour on such mixed fiber materials.

The Examples below serve to illustrate the invention. Unless a notice made to the contrary, the parts are parts by weight and the percentages represent percentages by weight. Parts by weight are in the same relation to parts by volume as kilogram to liter.

The compounds described in terms of formulae in these Examples are shown in the form of the free acids; in general, they are prepared and isolated in the form of their alkali metal salts and are used for dyeing in the form of their salts. Similarly, the starting compounds and components mentioned in the form of the free acid in the Examples below, can be employed in the synthesis as such or in the form of their salts, preferably their alkali metal salts, such as sodium or potassium salts. The absorption maxima ($\lambda_{max}$-values) were determined in aqueous solution for their alkali metal salts.

Example 1

85.25 parts of the monosodium salt of 1-amino-8-hydroxy-naphthalene-3,6-disulfonic acid are added to 1,050 parts of water, and the pH is adjusted to 7 with sodium carbonate to give a solution. A solution of 100 parts 3-(β-chloroethylsulfonyl)-phenyl-1-isocyanate in 500 parts of chlorobenzene is added at room temperature. The pH is allowed to drop to 5 and is held at 5 to 6 for 24 hours. The mixture is then heated to 45°C, 25 parts of diatomaceous earth (Celite) are added, and is is filtered. The chlorobenzene layer is

allowed to separate and is drawn off. The aqueous layer is then treated with 225 parts of sodium chloride, the precipitate is filtered with suction and dried to give 139 parts of coupling component which corresponds to the formula:

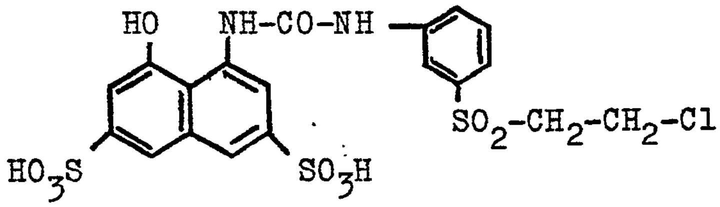

Example 2

In the procedure of Example 1, prior to the treatment with sodium chloride, sodium carbonate is added to pH 8.5 and the solution is heated at 55-60°C until there is no further change in pH. The solution is acidified with hydrochloric acid to pH 5 and treated with 225 parts of sodium chloride. The precipitate is filtered and dried to give a coupling component which corresponds to the formula:

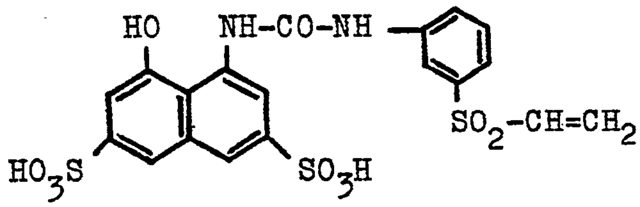

Example 3

17.0 parts of the monosodium salt of 1-amino-8-hydroxy-naphthalene-3,6-disulfonic acid are dissolved in 200 parts of water and neutralized with sodium carbonate to give a solution. 30.0 parts of pulverized N-[4-β--sulfatoethylsulfonyl)-phenyl]-1-carbamic acid phenyl ester (obtained by condensation or chloroformic acid phenyl ester with 4-amino-phenyl-1-β-sulfatoethyl-sulfone) are added to the above solution at 50-60°C at a pH value of 6-7 with vigorous stirring. Completion of the reaction is determined by thin layer chromatography. The solution is diluted with 100 parts of water, filtered and treated with sodium chloride. The precipitate is filtered, washed with sodium chloride solution and dried to give a coupling component which corresponds to the formula:

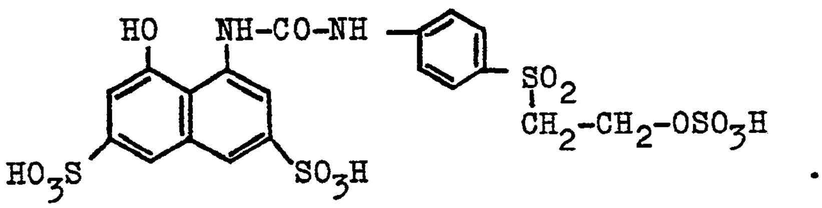

Example 4

85.25 parts of the monosodium salt of 1-amino-8-hydroxy-naphthalene-4,6-disulfonic acid are treated as in Example 1 to give a coupling component which corresponds to the formula:

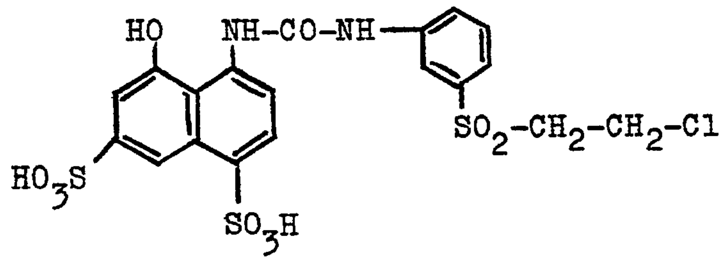

Example 5

59.7 parts of 2-amino-8-hydroxy-naphthalene-6-sulfonic acid are neutralized to pH 6 with lithium hydroxide and treated as in Example 1 to give a coupling component which corresponds to the formula:

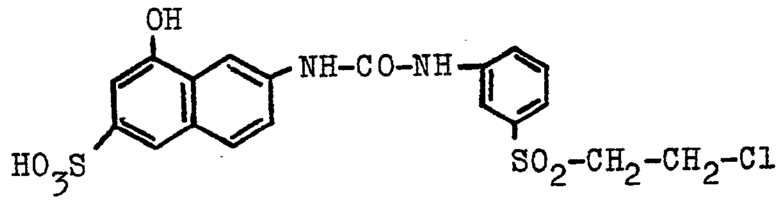

Example 6

59.7 parts of 3-amino-8-hydroxy-naphthalene-6-sulfonic acid are treated as in Example 5 to give a coupling component which in the free-acid form corresponds to the formula:

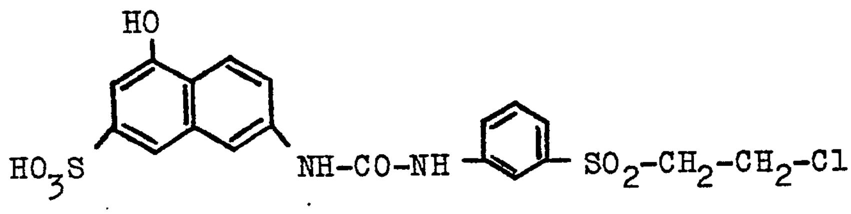

Example 7

68.2 parts of 1-amino-2,5-dimethoxy-phenyl-4-(β-sulfatoethyl)-sulfone in 300 parts of water are neutralized to pH 6 with sodium carbonate. The solution is clarified and reprecipitated with 28 parts of sulfuric acid. 34 parts of a 40 % aqueous sodium nitrite solution is introduced at 0 to 5°C to diazotize the amine, and then to the diazonium salt suspension is added a solution of 107 parts of the coupler from Example 1 in 930 parts water, and the pH is adjusted to 5.3 with sodium carbonate to yield the dyestuff corresponding to the formula

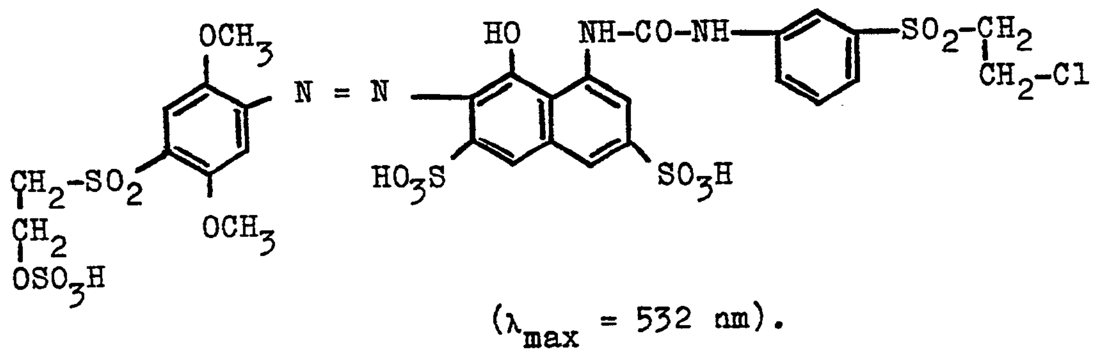

($\lambda_{max}$ = 532 nm).

The above dyestuff may be left as a solution, precipitated with sodium chloride or evaporated to dryness and it gives a violet shade on cotton. A solution of the above dyestuff showed no chemical or physical changes on storage for 10 months at pH of about 4.5.

Example 8

15.5 parts of 1-amino-2-methoxy-phenyl-5-(β-sulfatoethyl)-sulfone in 100 parts of water are cooled with 100 parts of ice. 5 parts of sulfuric acid are added followed by 9.0 parts of a 40 % aqueous sodium nitrite solution. To the diazonium salt slurry is added a solution of 24.2 parts of the coupler from Example 6 dissolved in 520 parts of water and the pH is adjusted to 6 to give the dyestuff corresponding to the formula

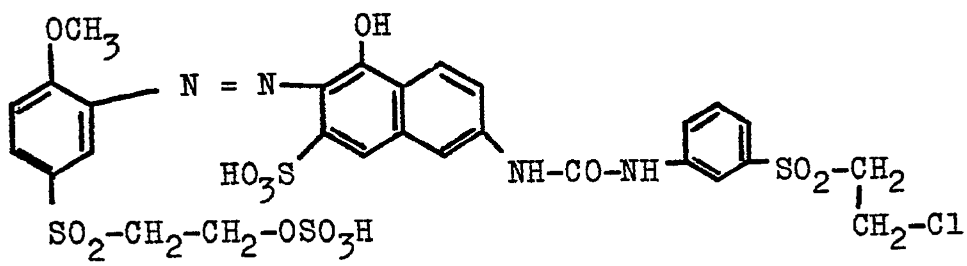

which is dried and gives on cotton an orange shade.

Example 9

16.4 parts of 2-amino-6-(β-sulfatoethylsulfonyl)-naphthalene-1-sulfonic acid is slurried in 120 parts of water and cooled to 5°C. 7.5 parts of a 40 % aqueous sodium nitrite solution is added to diazotize the amine. The diazonium salt slurry is added to a solution of 19.4 parts of the coupler from Example 5 in 240 parts of water while holding the pH at pH 5 to 6 with sodium acetate and sodium carbonate. The resulting dyestuff corresponding to the following formula

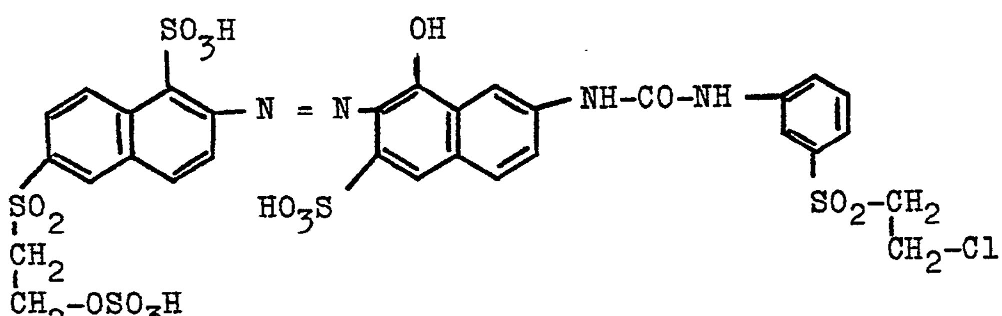

($\lambda_{max}$ = 505 nm)

is dried and gives on cotton a red shade.

Example 10

37.8 parts of 2-amino-8-(β-sulfatoethylsulfonyl)-naphthalene-6-sulfonic acid in 200 parts of water and 100 parts of ice is diazotized with 15.9 parts of a 40% aqueous sodium nitrite solution. The diazonium salt suspension is then added to a solution of 60.0 parts of the coupler from Example 1 in 430 parts of water, and the pH is adjusted to 5.3 with sodium carbonate. When the coupling is complete, 25.7 parts of copper sulfate pentahydrate is added and the solution is heated to 57-60°C. 220 parts of a 10% aqueous hydrogen peroxide solution is dropped in at 55-60°C and a pH of 4.7-5.0 to form the dyestuff corresponding to the formula

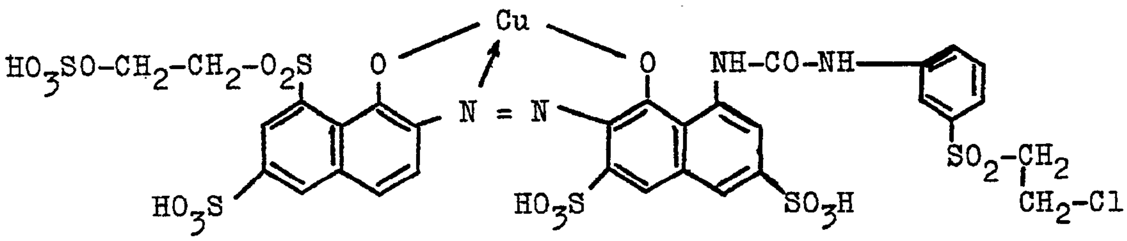

($\lambda_{max}$ = 570 nm)

which is isolated by salting with 190 parts of potassium chloride, filtered and dried. The dyestuff gives on cotton a blue shade.

Example 11

26.0 parts 2-amino-phenol-4-(β-hydroxyethyl)-sulfone is esterified overnight in 80 parts of 100% sulfuric acid, and then drowned in ice and water. 22.5 parts of a 40 % aqueous sodium nitrite solution is added dropwise to diazotize the amine, and the pH is adjusted to 5.5 with sodium carbonate. 67.8 parts of the coupler from Example 1 dissolved in 560 parts water is mixed with the diazonium salt slurry and the pH is adjusted to 6.8 with sodium carbonate. When the coupling is complete, 25 parts of copper sulfate pentahydrate are added, and the pH is adjusted to 5.0 with sodium carbonate to give the dyestuff corresonding to the formula

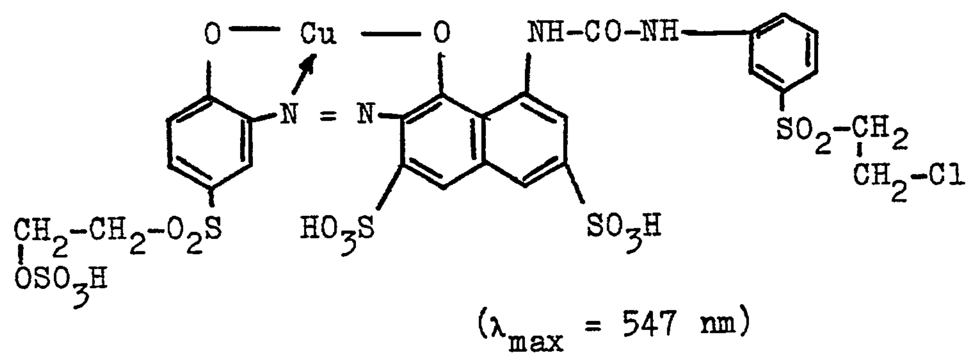

($\lambda_{max}$ = 547 nm)

The dyestuff is isolated by spyra-drying and gives on cotton fabric a violet shade.

Examples 12 to 31

Further monoazo dyes according to the general formula (1) are described in the Tabular Examples below by means of their diazo and coupling components. They can be prepared according to the invention, for example analogously to the above Working Examples, by diazotizing the aniline or naphthylamine compound, as the diazo component, and coupling the diazonium salt thereof with the naphthol compound, as the coupler, and by optional treating the monoazo compound formed with a metal-yielding agent to form the metal-complex dye. Also these dyestuffs according to the invention have good fiber-reactive dyestuff properties and effect, in particular on cellulose fiber materials, deeply coloured dyeings and prints with good fastness properties, in the colour shade indicated in the particular Tabular Example (the numerical value shown in parenthesis represents the $\lambda_{max}$-value in nm).

| Ex. | Dye corresponding to general formula (1), from diazo component | coupling component | metal-complex | shade ($\lambda_{max}$) |
|---|---|---|---|---|
| 12 | 4-(ß-sulfato-ethylsulfonyl)-aniline | 1-[N'-(3'-ß-chloro-ethylsulfonyl-phenyl)-ureido]-3,6-disulfo-8-naphthol | - - | red (512) |
| 13 | 2-methoxy-5-(ß-sulfatoethyl-sulfonyl)-aniline | dito | - - | blueish red (515) |
| 14 | 2-methoxy-5-methyl-4-(ß-sulfatoethyl-sulfonyl)-aniline | dito | - - | blueish red (525) |
| 15 | 2,5-dimethyl-4-(ß-sulfatoethyl-sulfonyl)-aniline | dito | - - | red |
| 16 | 3-(ß-sulfato-ethylsulfonyl)-aniline | dito | - - | red |
| 17 | 2-sulfo-5-(ß-sulfatoethyl-sulfonyl)-aniline | dito | - - | red |
| 18 | 2-carboxy-5-(ß-sulfatoethyl-sulfonyl)-aniline | dito | - - | red |

| Ex. | Dye corresponding to general formula (1), from diazo component | coupling component | metal-complex | shade ($\lambda_{max}$) |
|---|---|---|---|---|
| 19a | 2-hydroxy-4-(ß-sulfatoethylsulfonyl)-aniline | dito | 1:1-copper | blueish violet |
| 19b | dito | dito | 1:2-cobalt | navy blue |
| 20a | dito | dito | 1:1-copper | reddish violet |
| 20b | dito | dito | 1:2-cobalt | blueish violet |
| 20c | dito | dito | 1:2-chromium | greenish navy blue |
| 21 | 2-(ß-chloroethyl-sulfonyl)-aniline | dito | - - | red |
| 22 | 1-sulfo-6-(ß-sulfatoethyl-sulfonyl)-2-amino-naphthalene | dito | - - | red (535) |
| 23 | 5-methoxy-4-(ß-sulfatoethylsulfonyl)-2-amino-phenol | dito | 1:1-copper | reddish blue |
| 24 | 2-methoxy-5-(ß-sulfatoethylsulfonyl)-aniline | 1-[N'-(3-ß-chloroethylsulfonyl-phenyl)-ureido]-4,6-disulfo-8-naphthol | - - | red |

| Ex. | Dye corresponding to general formula (1), from diazo component | coupling component | metal-complex | shade ($\lambda_{max}$) |
|---|---|---|---|---|
| 25 | 1-sulfo-6-(ß-sulfatoethyl-sulfonyl)-1-amino-naphthalene | dito | - - | red (510) |
| 26 | 2-methoxy-5-(ß-sulfatoethyl-sulfonyl)-aniline | 2-[N'-(3'-ß-sulfato-ethylsulfonyl-phenyl)-ureido]-6-sulfo-8-naphthol | - - | scarlet (515) |
| 27 | 1-sulfo-6-(ß-sulfatoethyl-sulfonyl)-2-amino-naphthalene | 3-[N'-(3'-ß-chloroethyl-sulfonyl-phenyl)-ureido]-6-sulfo-8-naphthol | - - | orange (482) |
| 28 | 2-methoxy-5-methyl-4-(β-sulfatoethyl-sulfonyl)-aniline | 1-[N'-(3'-vinylsulfonyl-phenyl)-ureido]-3,6-disulfo-8-naphthol | - - | blueish red (525) |
| 29 | 2-methoxy-5-methyl-4-vinyl-sulfonyl-aniline | dito | - - | blueish red (525) |
| 30 | 2-sulfo-4-(ß-sulfatoethyl-sulfonyl)-aniline | 1-[N'-(3'-ß-chloroethyl-sulfonyl-phenyl)-ureido]-3,6-disulfo-8-naphthol | - - | red (510) |
| 31 | 4-(β-sulfato-ethylsulfonyl)-aniline | 2-sulfo-5-[N'-(3"-β-chloroethylsulfonyl)-phenyl]-ureido-aniline | - - | reddish yellow |

Example 32

41.1 parts of 2-amino-8-(β-sulfatoethylsulfonyl)-naphthalene-6-sulfonic acid were stirred into a mixture of 200 parts of water, 100 parts of ice and 15 parts of an aqueous 30 % hydrochloric acid and diazotized by the addition of an aqueous solution of 6.9 parts of sodium nitrite in the usual manner. Thereafter, 10.7 parts of 3-methyl-aniline were added, and stirring was continued until the coupling process has been ended (until the diazonium salt is no longer detectable). The pH-value of the solution of the monoazo compound formed was then slowly increased to 5 to 6 by means of sodium carbonate, and 60 parts of N-[4-(β-sulfatoethylsulfonyl)-phenyl]-1-carbamic acid phenylester (prepared by condensation reaction of chloroformic acid phenylester with 4-β-sulfatoethylsulfonyl-aniline) were then added. The temperature of the reaction batch was increased to 50 to 60°C and the pH-value maintained at 5 to 6 by means of sodium carbonate. The end of the reaction can be determined by thin-layer chromatography.

The azo dyestuff formed was isolated from the synthesis solution by salting out with potassium chloride. It has, written in the form of the free acid, the formula

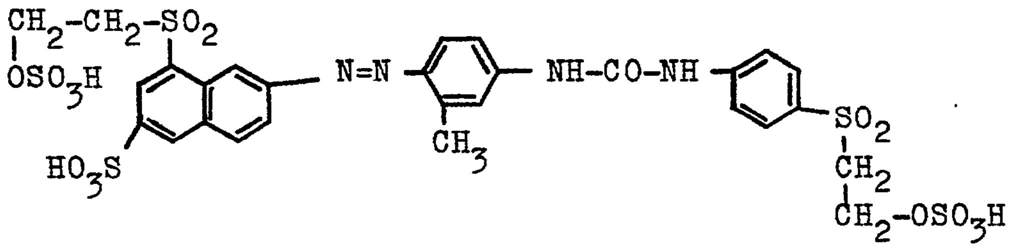

and produces on cotton, according to the application and fixation methods for fibre-reactive dyestuffs, reddish yellow dyeing and prints having very good fastnesses to light and to wet processing.

Example 33

36 parts of 2-amino-5-(β-sulfatoethylsulfonyl)-benzene-1-sulfonic acid were stirred into a mixture of 200 parts of water, 100 parts of ice and 15 parts of an aqueous 30 % hydrochloric acid and diazotized, in the usual manner, by the addition of an aqueous solution of 6.9 parts of sodium nitrite. Thereafter, 22.3 parts of 1-amino-naphthalene-6-sulfonic acid were added, and stirring was continued until the coupling reaction has been ended. The pH-value of the solution of the azo compound formed was then slowly increased to 5.5 to 6 by means of sodium carbonate, and a solution of 60 parts of 3-(β-chloroethylsulfonyl)-phenylisocyanate in 140 parts of chlorobenzene, having a temperature of 50°C, were poured in under stirring, and stirring was continued at a pH of 5 of 6 until the reaction was complete which can be find out by thin-layer chromatography. Thereafter, the organic solvent was distilled of under reduced pressure and the aqueous solution clarified in the usual manner by kieselguhr and filtration.

The azo dyestuff of the invention, prepared, having in the free acid form the formula

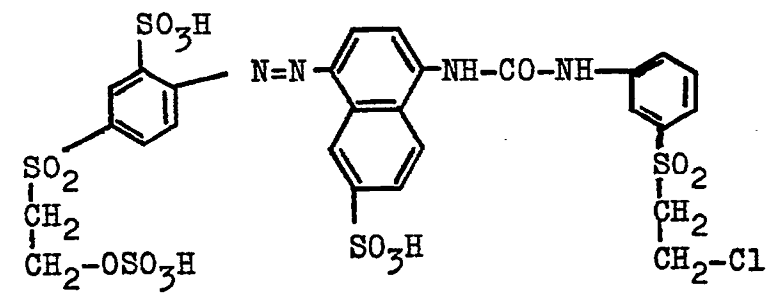

was isolated by salting out by means of potassium chloride, filtration and drying. This dyestuff of the invention produces, according to the conventional application and fixation methods for fiber-reactive dyestuffs, on cotton reddish yellow dyeings with good fastnesses.

Example 34

The following Example was conducted to illustrate the ability of the dyes of this invention to resist color yield loss with increasing dye bath temperature. The compounds tested were:
Compound A: The dye of Ex. 13 of the instant invention
Compound B: the dye of Ex. 22 of the instant invention
Compound C:

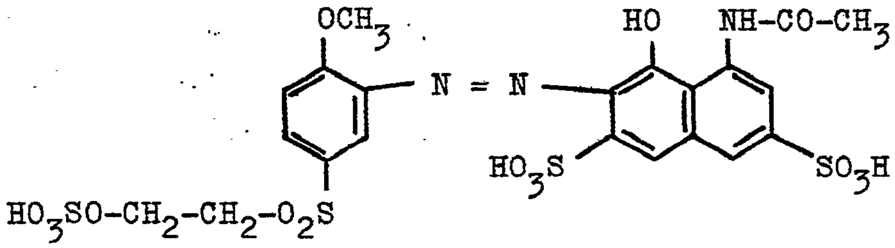

(known from US-PS 3,617,196, Example 2)

Compound D:

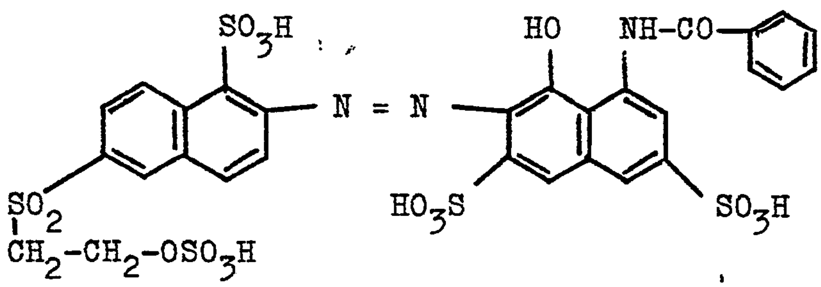

(known from US-PS 4,448,583, Compound II)

Dye bath solutions at nominal concentrations of 1 to 9 percent were prepared and dyeing were made on test specimens at 40°C, 60°C and 80°C by the exhaust dyeing procedure; the colour yield on each dyeing was measured in Colour Density Units (CDU) and the percentage colour yield loss over the temperature range of 60°C - 80°C calculated.

Table 1

| Nominal Dye Concentration | | % Color Yield Loss 60°C to 80°C | | | |
|---|---|---|---|---|---|
| | | Invention | | Prior Art | |
| | Compound: | A | B* | C* | D* |
| 1% | | −17.0 | −11.4 | −34.1 | −36 |
| 3% | | −17.0 | +3.0 | −32.3 | −28.7 |
| 5% | | −11.0 | +14.2 | −29.1 | −31.3 |
| 7% | | +0.5 | +5.0 | −24.0 | −24.8 |
| 9% | | +3.0 | +25.6 | −26.5 | −23.4 |

* Average of two tests

The above data show that the dyes of this invention exhibit lower colour yield percentage loss with increasing dye bath temperature.

Example 35

Test specimens were dyes using compounds of the invention. The dyeings were made using the chemical pad steam procedure. The percentage of dye fixation was determined by measuring colour yield of each specimen and calculating the percent dye fixed using the colour yield of an unwashed dyed specimen as the 100% standard.

Table 2

| | Dyeing Concentration | | | | |
|---|---|---|---|---|---|
| | 1% | 2% | 4% | 6% | 8% |
| Compound | % Fixed | | | | |
| Ex. 12 Dye | 101 | 92.1 | 102 | 92.5 | 84.9 |
| Ex. 13 Dye | 89.6 | 82.9 | 97.7 | 96.0 | 85.9 |
| Ex. 14 Dye | 89.4 | 93.6 | 83.5 | – | – |
| Ex. 22 Dye | 92.7 | 96.3 | 94.1 | 96.0 | 92.5 |

Example 36

A steam hydrolysis test has been developed to measure the sensitivity of dyes to steam hydrolysis in chemical pad steam dyeing operations. The test measures the cleavage of dye-fiber bonds under adverse conditions that can be encountered in commercial dyeing operations (long steam time - high alkalinity).

The dyes were tested in two different dye bath solutions which were:

| Test Condition | – | # 1 | #2 |
|---|---|---|---|
| Common Salt | – g/l | 250 | 250 |
| Soda Ash | – g/l | 20 | – |
| Caustic (50%) | – g/l | 5 | 20 |
| Steam Time | – min | 1 | 1, 3, 6 |

Fabric specimens dyed using the #1 test conditions (optimized conditions) were measured for colour yield in CDU and that value was used as the 100 % standard. Test specimens were dyed using the #2 test conditions (adverse conditions) and their colour yield in CDU was determined. The colour yield attained for each dyeing as a percentage of the standard are reported in the Table 3 for the following Test Dyes (VS means the β-sulfatoethylsulfonyl group):

Dye 1 - Dye of Example 22 (the invention):

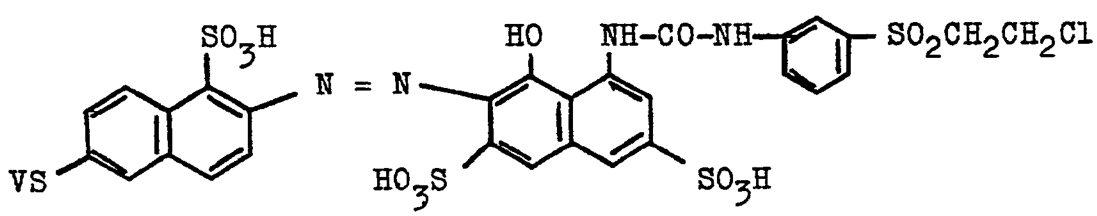

Dye 2 - (chlorotriazine type):

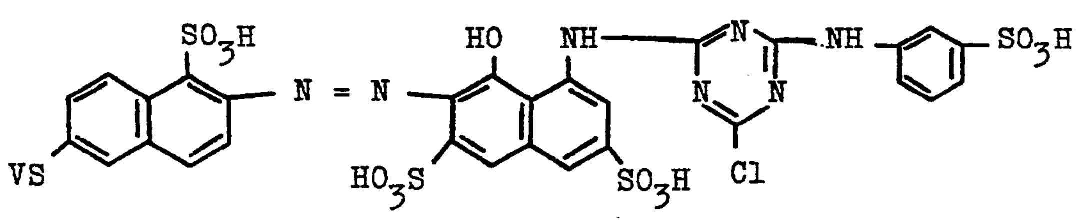

(Europ. Publication No. 0,111,288 A1, Example 19)

Dye 3 - (single fiber-reacitve group):

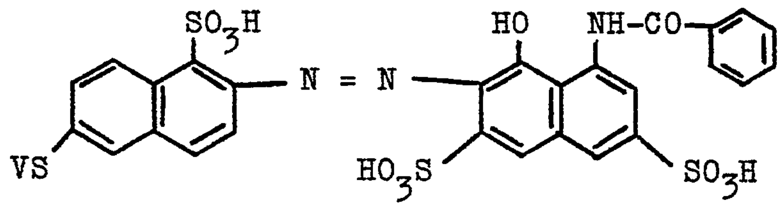

(US-PS 4,448,583, Compound II)

Dye 4 - (single fiber-reacitve group):

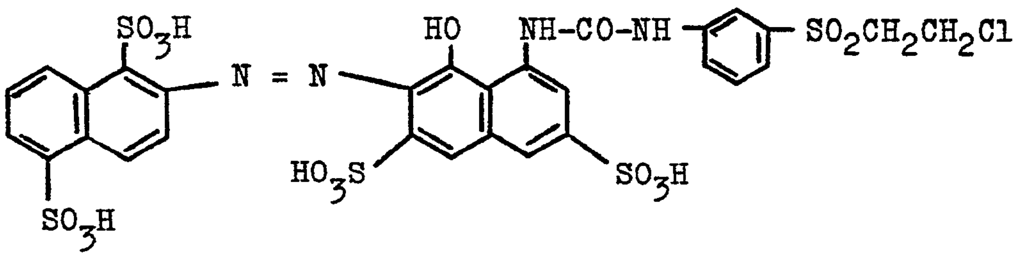

(US-PS 3,419,542, Example 19)

Table 3

| | % Strength After Steaming | | |
|---|---|---|---|
| Dye | 1 min | 3 min | 6 min |
| 1 (invention) | 93.7 | 70.82 | 34.0 |
| 2 (triazine) | 79.9 | 40.8 | 26.3 |
| 3 (single VS) | 81.15 | 40.57 | 13.52 |
| 4 (single VS) | 79.3 | 38.3 | 20.8 |

The above data show that dyes of the invention have superior resistance to steam hydrolysis.

Example 37

The dyes of Example 36 were tested for sensitivity to alkali used in chemical-pad-steam dyeing. Experience has shown that certain dyes do not show sensitivity to alkali i.e. the dye's fixation does not vary appreciably with high alkalinity and such dyes give consistent dyeings even though the commercial dyeing conditions are not maintained in the optimum ranges. The percent fixation was measured relative to a standard unwashed colour specimen. The results of this experiment are as follows:

Table 4

| | Caustic Concentration in Dye Bath – g/l | | | | | | | |
|---|---|---|---|---|---|---|---|---|
| Dye | 3 | 6 | 9 | 12 | 15 | 18 | 21 | Dye Type |
| 1 | 87.1 | 93.3 | 92.2 | 92.9 | 92.9 | 91.2 | 88.7 | invention |
| 2 | 76.9 | 86.6 | 80.9 | 79.1 | 82.7 | 81.5 | 79.5 | triazine |
| 3 | 80.0 | 85.0 | 85.7 | 84.0 | 82.8 | 75.6 | 69.8 | single VS |

The above data demonstrate the superior resistance of the dyes of the invention to increasing alkalinity in the dye bath.

**Claims**

1. A compound according to the general formula (1)

$$X - SO_2 - A - N = N - W - \underset{R}{\underset{|}{N}} - CO - NH - Z - SO_2 - Y$$

wherein:

X and Y are independently selected from vinyl, β-thiosulfatoethyl, β-bromoethyl, β-acetyloxyethyl, β-hydroxyethyl, β-phosphatoethyl, β-methylsulfonyloxyethyl, β-phenoxyethyl, β-sulfatoethyl, β-chloroethyl, β-phenylsulfonyloxy-ethyl and a group of the formula $-CH_2-CH_2-NR^1R^2$, in which $R^1$ and $R^2$ are independently selected from hydrogen, alkyl of 1 to 4 carbon atoms and sulfo-substituted alkyl of 1 to 4 carbon atoms;

R is hydrogen, alkyl of 1 to 4 carbon atoms or sulfo-substituted alkyl of 1 to 4 carbon atoms;

A is a phenylene or naphthylene radical optionally substituted with hydroxy, halogen, alkyl of 1 to 4 carbon atoms, alkoxy of 1 to 4 carbon atoms, carboxy and/or sulfo;

W is a phenylene or naphthylene radical optionally substituted with carboxy, sulfo, amino, carbamoyl unsubstituted or mono- or disubstituted by alkyl of 1 to 4 carbon atoms, phenyl and/or phenyl-(alkyl of 1 to 4 carbon atoms), sulfamoyl unsubstituted or mono- or disubstituted by alkyl of 1 to 4 carbon atoms, phenyl and/or phenyl-(alkyl of 1 to 4 carbon atoms), alkyl of 1 to 4 carbon atoms, alkoxy of 1 to 4 carbon atoms, hydroxy or halogen, the hydroxy or amino group of which, if present, are bonded to W in the ortho- or para-position relative to the azo group;

Z is a phenylene radical optionally substituted with halogen, alkoxy of 1 to 4 carbon atoms and/or alkyl of 1 to 4 carbon atoms.

2. A compound according to claim 1, wherein

A is phenylene unsubstituted or substituted with 1 or 2 substituents selected from the group consisting of hydroxy, halogen, alkyl of 1 to 4 carbon atoms, alkoxy of 1 to 4 carbon atoms, carboxy and sulfo, and

W is phenylene unsubstituted or substituted with 1 or 2 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1 to 4 carbon atoms, phenyl or phenyl-(alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group, or wherein

A is phenylene unsubstituted or substituted with 1 or 2 substituents selected from the group consisting of hydroxy, halogen, alkyl of 1 to 4 carbon atoms, alkoxy of 1 to 4 carbon atoms, carboxy and sulfo, and W is naphthylene unsubstituted or substituted with 1, 2 or 3 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1 to 4 carbon atoms, phenyl or phenyl-alkyl of 1 to 4 carbon atoms), amino, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group, or wherein

A is naphthylene unsubstituted or substituted with 1, 2 or 3 substituents selected from the group of substituents consisting of hydroxy, halogen, alkyl of 1 to 4 carbon atoms, alkoxy of 1 to 4 carbon atoms, carboxy and sulfo, and

W is phenylene unsubstituted or substituted with 1 or 2 substitutents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1 to 4 carbon atoms, phenyl or phenyl-(alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group, or wherein , A is naphthylene unsubstituted or substituted with 1, 2 or 3 substituents selected from the group consisting of hydroxy, halogen, alkyl of 1 to 4 carbon atoms, alkoxy of 1 to 4 carbon atoms, carboxy and sulfo, and W is naphthylene unsubstituted or substituted with 1, 2 or 3 substituents selected from the group of substituents consisting of sulfo, sulfamoyl, carbamoyl, sulfamoyl mono- or disubstituted by alkyl of 1 to 4 carbon atoms, phenyl or phenyl-(alkyl of 1 to 4 carbon atoms), carbamoyl mono- or disubstituted by alkyl of 1 to 4 carbon atoms, phenyl or phenyl-(alkyl of 1 to 4 carbon atoms), amino, carboxy, alkyl of 1 to 4 carbon atoms, alkoxy of 1 to 4 carbon atoms, hydroxy and halogen, the hydroxy or amino group of which, if present, preferably mandatorily present, is in the ortho- or para-position relative to the azo group.

3. The copper-, nickel-, chromium- or cobalt-metal complex compound of a compound as defined in claim 1 or 2.

4. A compound according to claim 1, of the general formula (1a)

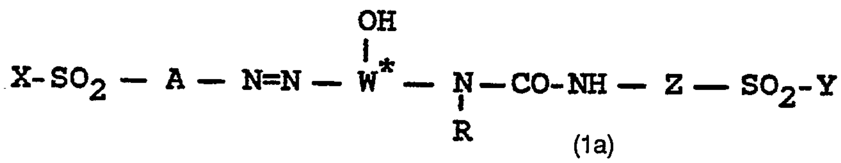

(1a)

wherein X, R, Z and Y are defined as in claim 1 and A is phenylene unsubstituted or substituted with 1 or 2 substitutents selected from the group consisting halogen, alkyl of 1 to 4 carbon atoms, alkoxy of 1 to 4 carbon atoms, carboxy and sulfo, and

W* is a naphthalene ring to which the hydroxy group is bonded in the ortho-position relative to the azo group and which is substituted by 1 or 2 sulfo groups.

5. A 1:1-copper-, 1:2-chromium- or 1:2-cobalt-complex dye, according to claim 3, of a compound of the general formula (1c)

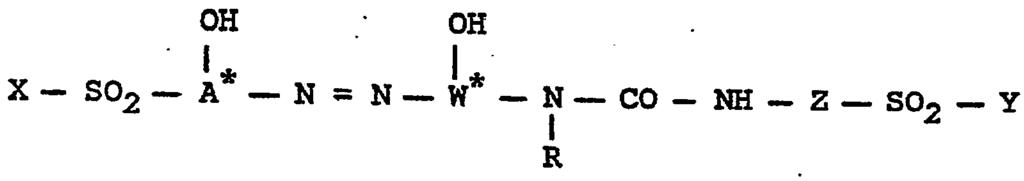

(1c)

wherein X, R, Z and Y are defined as in claim 1,

A* is benzene ring unsubstituted or substituted with 1 or 2, preferably 1, substituents selected from the group consisting of halogen, alkyl of 1 to 4 carbon atoms, alkoxy of 1 to 4 carbon atoms, carboxy and sulfo, or is a naphthalene ring unsubstituted or substituted by 1 or 2 sulfo groups, and the hydroxy group which is capable of forming a metal-complex is bonded to A* in the ortho-position relative to the azo group, and W is a naphthalene ring which is substituted by 1 or 2 substituents and the hydroxy group which is capable of forming a metal-complex is bonded to W in the orthoposition relative to the azo group.

6. A dye according to at least one of claims 1 to 5, wherein X is β-sulfatoethyl and Y is β-chloroethyl.

7. A dye according to at least one of claims 1 to 5, wherein X and Y are both vinyl.

8. A compound according to claim 1, of the formula

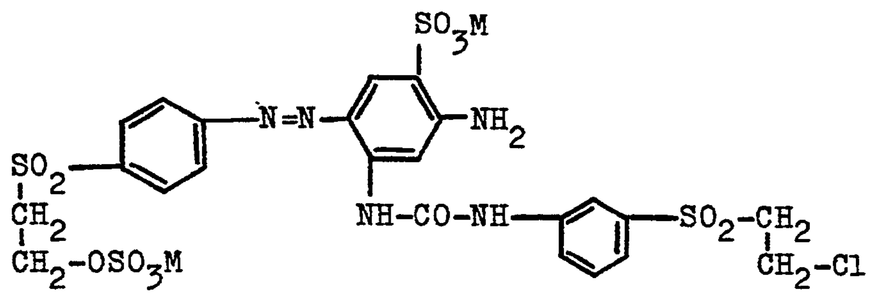

in which M is hydrogen or an alkali metal.

9. A compound according to claim 1, of the formula

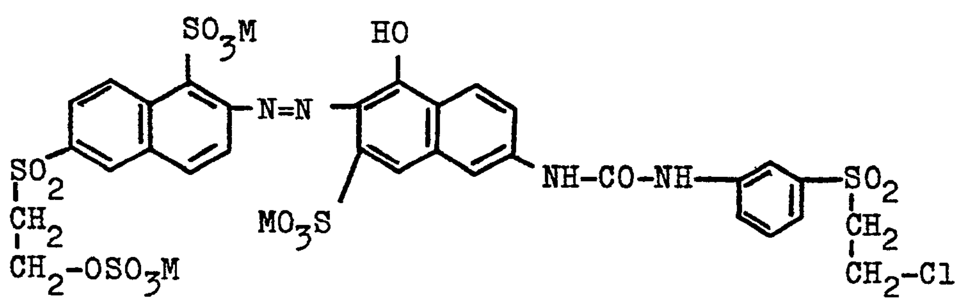

in which M is hydrogen or an alkali metal.

10. A compound according to claim 1, of the formula

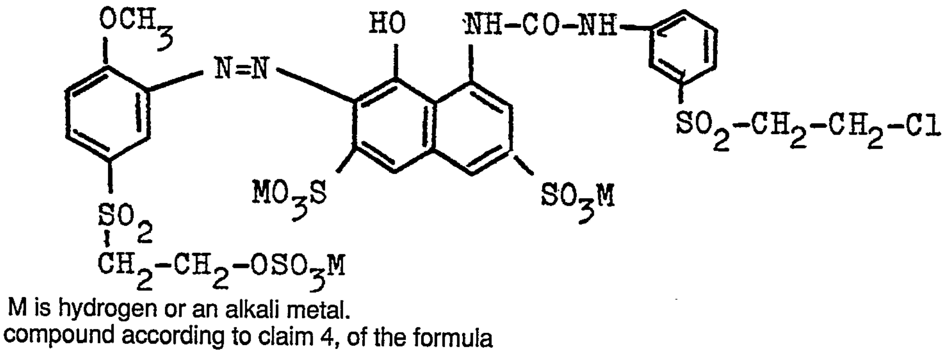

in which M is hydrogen or an alkali metal.

11. A compound according to claim 4, of the formula

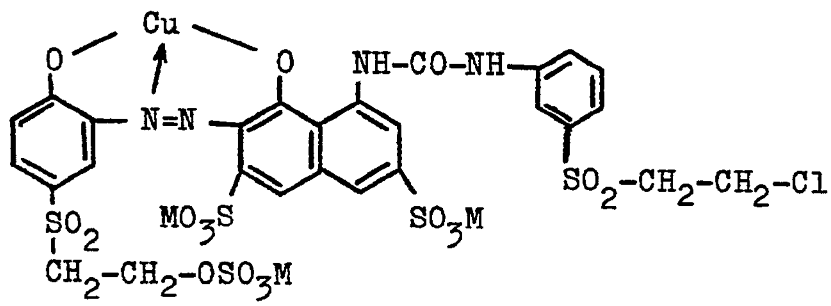

in which M is hydrogen or an alkali metal.

12. A compound according to claim 1, of the formula

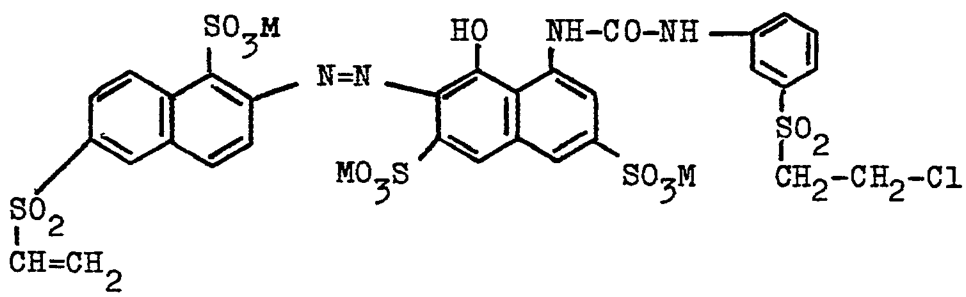

in which M is hydrogen or an alkali metal.

13. A compound according to claim 4, of the formula

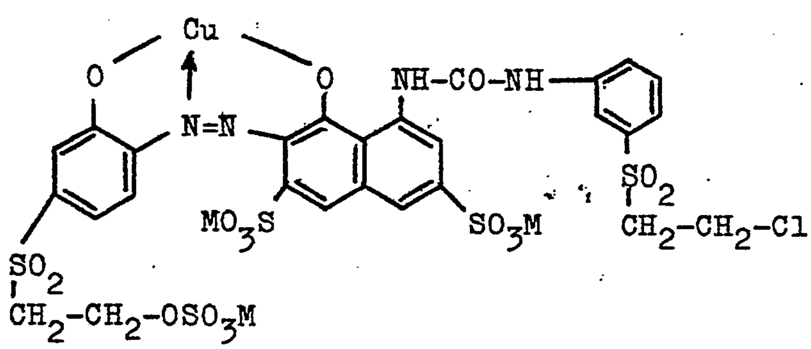

in which M is hydrogen or an alkali metal.

14. A compound according to claim 1, of the formula

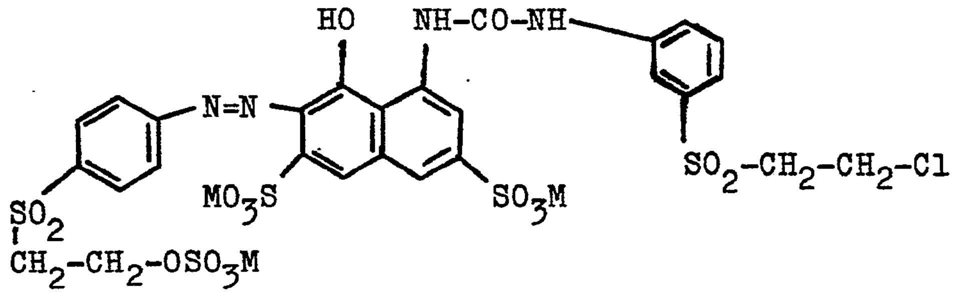

in which M is hydrogen or an alkali metal.

15. A compound according to claim 1, of the formula

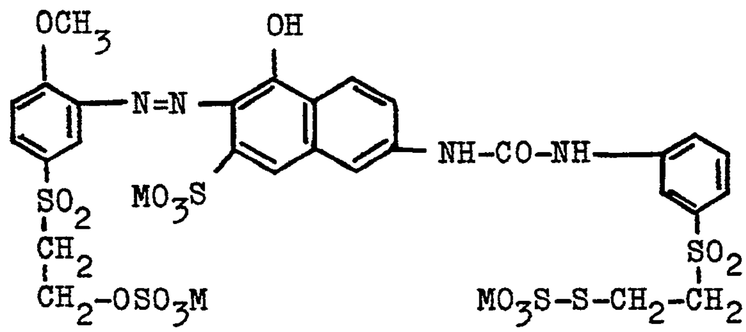

in which M is hydrogen or an alkali metal.

16. A compound according to claim 1, of the formula

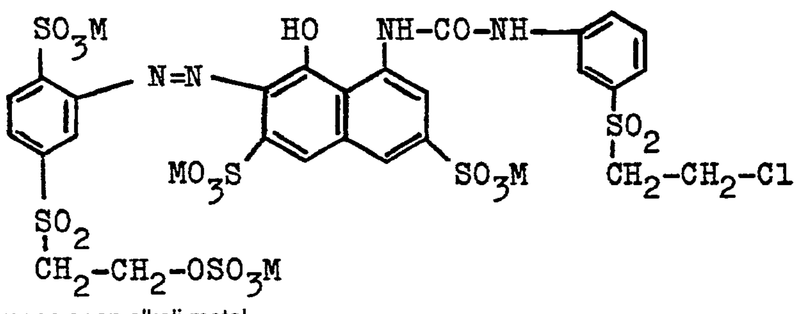

in which M is hydrogen or an alkali metal.

17. Use of a dye, according to at least one of claims 1 to 17, for colouring (dyeing or printing) a fibre material containing hydroxy and/or carboxamido groups.

18. A process for colouring hydroxy- and/or carboxamido-containing fibre materials, which comprises applying to said fibre a dye and fixing the dye on the fibre at a temperature from about room temperature to about 230°C in the absence or in the presence of a agent having an alkaline reaction, the improvement consisting of employing as the dye a dye according to at least one of claims 1 to 16.

19. A process for the preparation of a water-soluble monoazo dye of the general formula (1), as defined in claim 1, which comprises diazotizing an amino compound of the general formula (2)

$X-SO_2-A-NH_2$ (2)

in which A and X are defined as in claim 1, and reacting the diazonium salt with a coupling compound of the general formula (3)

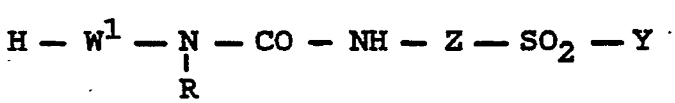

in which $W^1$ has one of the meanings of W as defined in claim 1 and is mandatorily substituted by an amino or hydroxy group, and R, Z and Y are defined as in claim 1, or reacting an amino-azo compound of the general formula (6)

$$X - SO_2 - A - N = N - W - \underset{R}{N} - H \qquad (6)$$

in which X, A, W and R are defined as in claim 1, with an aromatic isocyanate of the general formula (4)
$Y - SO_2 - Z - NCO$ (4)
in which Y and Z are defined as in claim 1, or with an aromatic carbamic acid derivative of the general formula (5)
$Y - SO_2 - Z - NH - CO - B$ (5)
in which B is a chlorine atom or a phenoxy group and Z and Y are defined as in claim 1.

20. A process for the preparation of a copper, chromium, cobalt or nickel metalized complex dye of a water-soluble monoazo dye of the general formula (1), as defined in claim 1, which comprises reacting a metal-free dye of the general formula (1) as defined in claim 1, in which, however, A and W contain in the ortho-positions to the azo group both a substituent which is capable of forming a metal complex or is capable of being converted to such a group, with a copper-, chromium-, cobalt- or nickel-yielding agent, or reacting a copper, chromium, cobalt or nickel metalized complex-amino-azo-compound of the general formula (6) defined in claim 19, with an aromatic isocyanate of the general formula (4) defined in claim 19, or with an aromatic carbamic acid derivative of the general formula (5) defined in claim 19.

## Patentansprüche

1. Verbindung entsprechend der allgemeinen Formel (1)

$$X - SO_2 - A - N = N - W - \underset{R}{N} - CO - NH - Z - SO_2 - Y \qquad (1)$$

in welcher bedeuten:
X und Y sind unabhängig voneinander Vinyl, β-Thiosulfatoethyl, β-Bromethyl, β-Acetyloxyethyl, β-Hydroxyethyl, β-Phosphatoethyl, β-Methylsulfonyloxyethyl, β-Phenoxyethyl, β-Sulfatoethyl, β-Chlor-ethyl, β-Phenylsulfonyloxy-ethyl oder eine Gruppe der Formel
$-CH_2-CH_2-NR^1R^2$,
in welcher $R^1$ und $R^2$ unabhängig voneinander Wasserstoff, Alkyl von 1 bis 4 Kohlenstoffatomen oder sulfosubstituiertes Alkyl von 1 bis 4 Kohlenstoffatomen bedeuten;
R ist Wasserstoff, Alkyl von 1 bis 4 Kohlenstoffatomen oder sulfosubstituiertes Alkyl von 1 bis 4 Kohlenstoffatomen;
A ist ein Phenylen- oder Naphthylenrest, welche gegebenenfalls durch Hydroxy, Halogen, Alkyl von 1 bis 4 Kohlenstoffatomen, Alkoxy von 1 bis 4 Kohlenstoffatomen, Carboxy und/oder Sulfo substituiert sind;
W ist ein Phenylen- oder Naphthylenrest, welche gegebenenfalls durch Carboxy, Sulfo, Amino, unsubstituiertes Carbamoyl, durch Alkyl von 1 bis 4 Kohlenstoffatomen, Phenyl und/oder Phenylalkyl mit einem Alkyl von 1 bis 4 Kohlenstoffatomen mono- oder disubstituiertes Carbamoyl, unsubstituiertes Sulfamoyl, durch Alkyl von 1 bis 4 Kohlenstoffatomen, Phenyl und/oder Phenylalkyl mit einem Alkyl von 1 bis 4 Kohlenstoffatomen mono- oder disubstituiertes Sulfamoyl, Alkyl von 1 bis 4 Kohlenstoffatomen, Alkoxy von 1 bis 4 Kohlenstoffatomen, Hydroxy oder Halogen substituiert sind, wobei die Hydroxy- oder Aminogruppe, sofern sie vorhanden ist, an W in ortho- oder para-Stellung zur Azogruppe gebunden ist,
Z ist ein Phenylenrest, der gegebenenfalls durch Halogen, Alkoxy von 1 bis 4 Kohlenstoffatomen und/oder Alkyl von 1 von 4 Kohlenstoffatomen substituiert ist.

2. Eine Verbindung nach Anspruch 1, in welcher
A unsubstituiertes Phenylen ist oder Phenylen ist, das durch 1 oder 2 Substituenten substituiert ist, die aus der folgenden Gruppe von Substituenten ausgewählt sind: Hydroxy, Halogen, Alkyl von 1 bis 4 Kohlenstoffatomen, Alkoxy von 1 bis 4 Kohlenstoffatomen, Carboxy und Sulfo, und
W unsubstituiertes Phenylen ist oder Phenylen ist, das durch 1 oder 2 Substituenten substituiert ist, die aus der folgenden Gruppe von Substituenten ausgewählt sind: Sulfo, Sulfamoyl, Carbamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Sulfamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Carbamoyl, Amino, Carboxy, Alkyl von 1 bis 4 Kohlenstoffatomen, Alkoxy von 1 bis 4 Kohlenstoffatomen, Hydroxy und Halogen, wobei die Hydroxy- oder Aminogruppe, sofern sie vorhanden ist, vorzugsweise zwingend vorhanden ist, in ortho- oder para-Stellung zur Azogruppe steht,
oder in welcher
A unsubstituiertes Phenylen ist oder Phenylen ist, das durch 1 oder 2 Substituenten substituiert ist, die aus der folgenden Gruppe von Substituenten ausgewählt sind. Hydroxy, Halogen, Alkyl von 1 bis 4 Kohlenstoffatomen, Alkoxy von 1 bis 4 Kohlenstoffatomen, Carboxy und Sulfo, und

W unsubstituiertes Naphthylen ist oder Naphthylen ist, das durch 1, 2 oder 3 Substituenten substituiert ist, wobei diese aus der folgenden Gruppe von Substituenten ausgewählt sind. Sulfo, Sulfamoyl, Carbamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Sulfamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Carbamoyl, Amino, Alkyl von 1 bis 4 Kohlenstoffatomen, Alkoxy von 1 bis 4 Kohlenstoffatomen, Hydroxy und Halogen, wobei die Hydroxy- oder Aminogruppe, sofern sie vorhanden ist, vorzugsweise zwingend vorhanden ist, in ortho- oder para-Stellung zur Azogruppe steht,
oder in welcher
A unsubstituiertes Naphthylen ist oder Naphthylen ist, das durch 1, 2 oder 3 Substituenten substituiert ist, wobei diese aus der folgenden Gruppe von Substituenten ausgewählt sind. Hydroxy, Halogen, Alkyl von 1 bis 4 Kohlenstoffatomen, Alkoxy von 1 bis 4 Kohlenstoffatomen, Carboxy und Sulfo, und
W unsubstituiertes Phenylen ist oder Phenylen ist, das durch 1 oder 2 Substituenten substituiert ist, die aus der folgenden Gruppe von Substituenten ausgewählt sind: Sulfo, Sulfamoyl, Carbamoyl, durch Alkyl von 1 bis 4 Kohlenstoffatomen, Phenyl oder Phenylalkyl mit einem Alkyl von 1 bis 4 Kohlenstoffatomen, mono- oder disubstituiertes Sulfamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Carbamoyl, Amino, Carboxy, Alkyl von 1 bis 4 Kohlenstoffatomen, Alkoxy von 1 bis 4 Kohlenstoffatomen, Hydroxy und Halogen, wobei die Hydroxy- oder Aminogruppe, sofern sie vorhanden ist, vorzugsweise zwingend vorhanden ist, in ortho- oder para-Stellung zur Azogruppe steht,
oder in welcher
A unsubstituiertes Naphthylen ist oder Naphthylen ist, das durch 1, 2 oder 3 Substituenten substituiert ist, wobei diese aus der folgenden Gruppe von Substituenten ausgewählt sind. Hydroxy, Halogen, Alkyl von 1 bis 4 Kohlenstoffatomen, Alkoxy von 1 bis 4 Kohlenstoffatomen, Carboxy und Sulfo, und
W unsubstuiertes Naphthylen ist oder Naphthylen ist, das durch 1, 2 oder 3 Substituenten substituiert ist, wobei diese aus der folgenden Gruppe von Substituenten ausgewählt sind: Sulfo, Sulfamoyl, Carbamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Sulfamoyl, durch Alkyl von 1 bis 4 Kohlenstoffatomen, Phenyl oder Phenylalkyl mit einem Alkyl von 1 bis 4 Kohlenstoffatomen mono- oder disubstituiertes Carbamoyl, Amino, Carboxy, Alkyl von 1 bis 4 Kohlenstoffatomen, Alkoxy von 1 bis 4 Kohlenstoffatomen, Hydroxy und Halogen, wobei die Hydroxy- oder Aminogruppe, sofern sie vorhanden ist, vorzugsweise zwingend vorhanden ist, in ortho- oder para-Stellung zur Azogruppe steht.

3. Die Kupfer-, Nickel-, Chrom- oder Kobaltmetallkomplex-Verbindung einer in Anspruch 1 oder 2 definierten Verbindung.

4. Eine Verbindung nach Anspruch 1 entsprechend der allgemeinen Formel (1a)

$$X\text{-}SO_2 - A - N{=}N - \overset{\overset{\displaystyle OH}{|}}{W^*} - \underset{\underset{\displaystyle R}{|}}{N} - CO\text{-}NH - Z - SO_2\text{-}Y \qquad (1a)$$

in welcher X, R, Z und Y wie in Anspruch 1 definiert sind und A unsubstituiertes Phenylen oder Phenylen ist, das durch 1 oder 2 Substituenten substituiert ist, welche aus der folgenden Gruppe von Substituenten ausgewählt sind: Halogen, Alkyl von 1 bis 4 Kohlenstoffatomen, Alkoxy von 1 bis 4 Kohlenstoffatomen, Carboxy und Sulfo; und W* ein Naphthalinring ist, an welchen die Hydroxygruppe in ortho-Stellung zur Azogruppe gebunden ist und der durch 1 oder 2 Sulfogruppen substituiert ist.

5. Ein 1:1-Kupferkomplex-, 1:2-Chromkomplex- oder 1:2-Kobaltkomplex-Farbstoff gemäß Anspruch 3 einer Verbindung der allgemeinen Formel (1c)

$$X - SO_2 - \overset{\overset{\displaystyle OH}{|}}{A^*} - N = N - \overset{\overset{\displaystyle OH}{|}}{W^*} - \underset{\underset{\displaystyle R}{|}}{N} - CO - NH - Z - SO_2 - Y \qquad (1c)$$

in welcher X, R, Z und Y wie in Anspruch 1 definiert sind, A* ein Benzolring ist, der unsubstituiert oder durch 1 oder 2, bevorzugt 1, Substituenten substituiert ist, wobei diese aus der folgenden Gruppe von Substituenten ausgewählt sind: Halogen, Alkyl von 1 bis 4 Kohlenstoffatomen, Alkoxy von 1 bis 4 Kohlenstoffatomen, Carboxy und Sulfo; oder A* ein Naphthalinring ist, der unsubstituiert ist oder durch 1 oder 2 Sulfogruppen substituiert ist, wobei die Hydroxygruppe, die zur Metallkomplexbildung befähigt ist, an A* in ortho-Stellung zur Azogruppe gebunden ist, und W* ein Naphthalinring ist, der durch 1 oder 2 Substituenten substituiert ist, wobei die Hydroxygruppe, die zur Metallkomplexbildung befähigt ist, an W* in

ortho-Stellung zur Azogruppe gebunden ist.

6. Ein Farbstoff nach mindestens einem der Ansprüche 1 bis 5, dadurch gekennzeichnet, daß X β-Sulfatoethyl und Y β-Chlorethyl ist.

7. Ein Farbstoff nach mindestens einem der Ansprüche 1 bis 5, dadurch gekennzeichnet, daß X und Y beide Vinyl sind.

8. Eine Verbindung nach Anspruch 1 der Formel

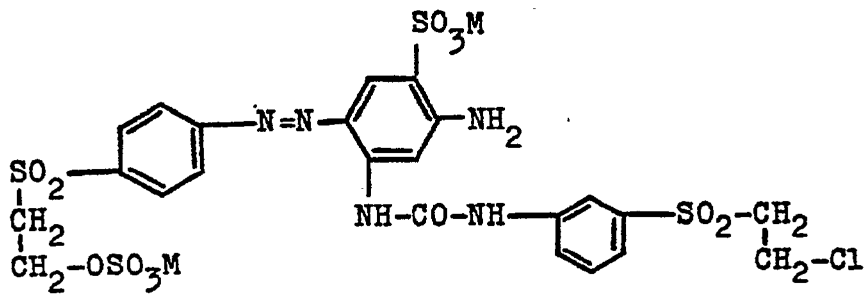

in welcher M Wasserstoff oder ein Alkalimetall ist.

9. Eine Verbindung nach Anspruch 1 der Formel

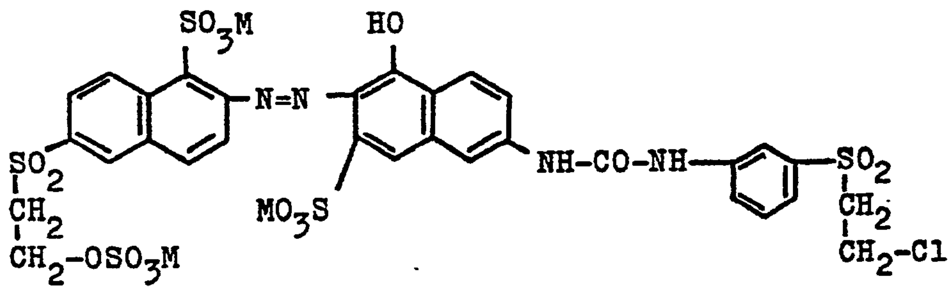

in welcher M Wasserstoff oder ein Alkalimetall ist.

10. Eine Verbindung nach Anspruch 1 der Formel

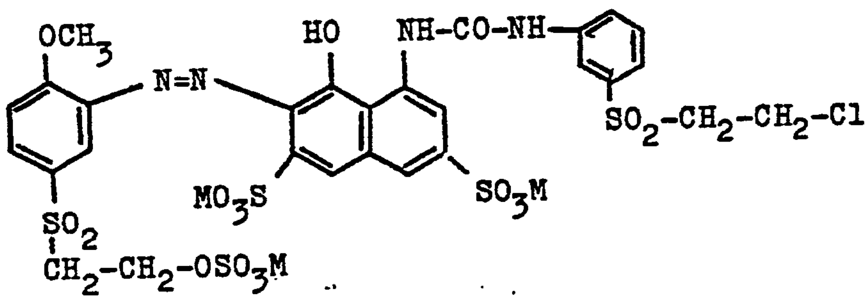

in welcher M Wasserstoff oder ein Alkalimetall ist.

11. Eine Verbindung nach Anspruch 4 der Formel

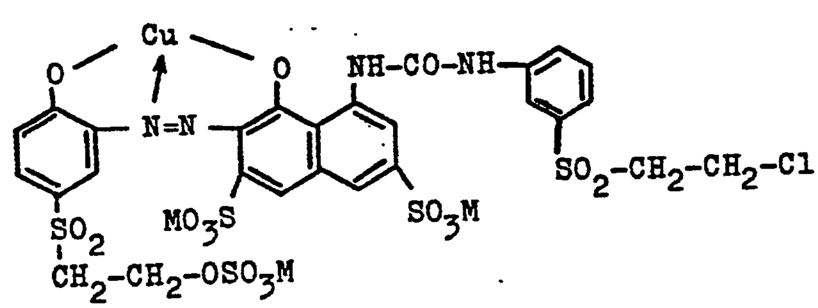

in welcher M Wasserstoff oder ein Alkalimetall ist.

12. Eine Verbindung nach Anspruch 1 der Formel

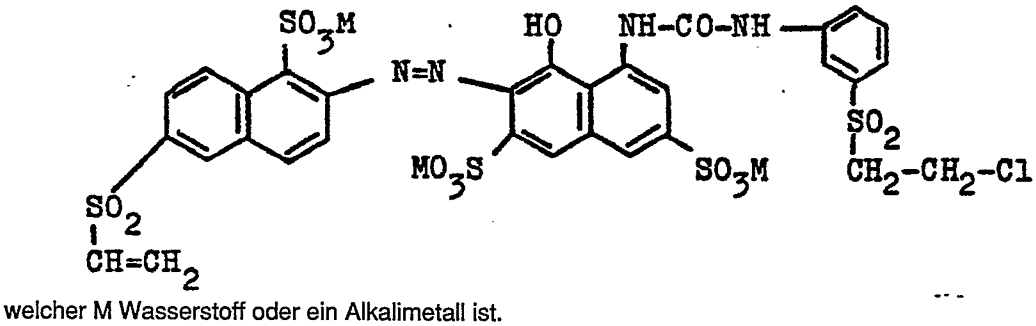

in welcher M Wasserstoff oder ein Alkalimetall ist.

13. Eine Verbindung nach Anspruch 4 der Formel

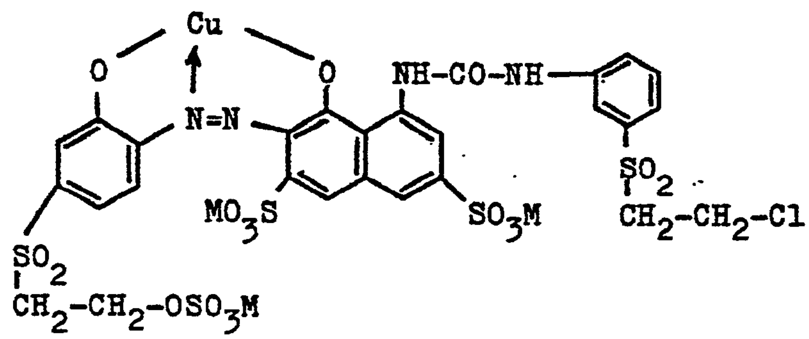

in welcher M Wasserstoff oder ein Alkalimetall ist.

14. Eine Verbindung nach Anspruch 1 der Formel

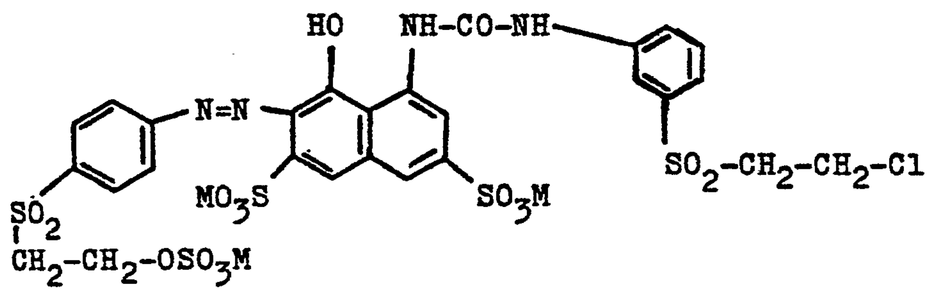

in welcher M Wasserstoff oder ein Alkalimetall ist.

15. Eine Verbindung nach Anspruch 1 der Formel

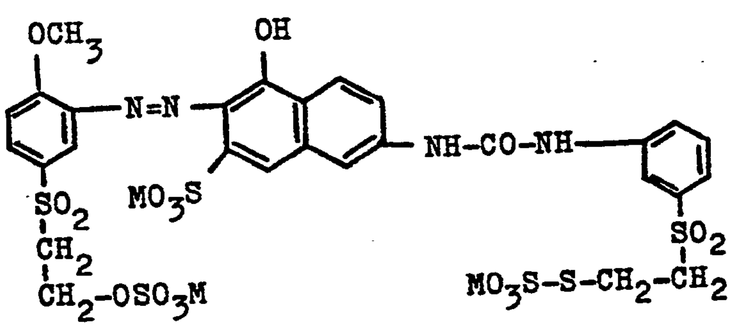

in welcher M Wasserstoff oder ein Alkalimetall ist.

16. Eine Verbindung nach Anspruch 1 der Formel

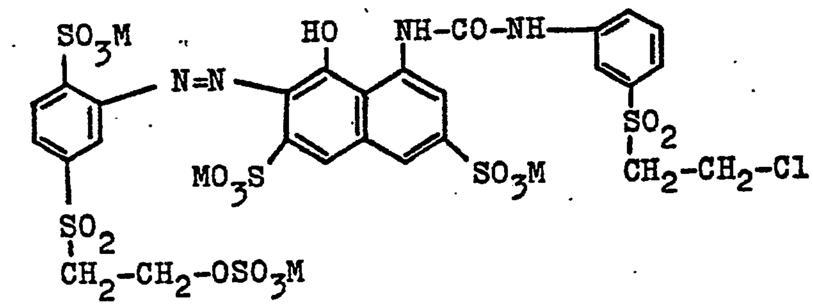

in welcher M Wasserstoff oder ein Alkalimetall ist.

17. Verwendung eines Farbstoffes von mindestens einem der Ansprüche 1 bis 16 zum Kolorieren (Färben oder Bedrucken) eines Hydroxy- und/oder Carboxamidgruppen enthaltenden Fasermaterials.

18. Ein Verfahren zum Kolorieren von Hydroxy- und/oder Carboxamidgruppen enthaltenden Fasermaterials, gemäß dem man auf das genannte Fasermaterial einen Farbstoff aufbringt und den Farbstoff auf der Faser bei einer Temperatur von etwa Raumtemperatur bis etwa 230°C in Abwesenheit oder in Gegenwart eines alkalisch reagierenden Mittels fixiert, wobei die Verbesserung darin besteht, daß man als Farbstoff einen Farbstoff nach mindestens einem der Ansprüche 1 bis 16 verwendet.

19. Ein Verfahren zur Herstellung eines wasserlöslichen Monoazofarbstoffes der in Anspruch 1 definierten allgemeinen Formel (1), dadurch gekennzeichnet, daß man eine Aminoverbindung der allgemeinen Formel (2)

$X–SO_2–A–NH_2$ (2)

in welcher A und X wie in Anspruch 1 definiert sind, diazotiert und das Diazoniumsalz mit einer Kupplungskomponente der allgemeinen Formel (3)

$$H - W^1 - \underset{\displaystyle R}{\underset{|}{N}} - CO - NH - Z - SO_2 - Y \qquad (3)$$

in welcher $W^1$ eine der Bedeutungen von W gemäß Anspruch 1 hat und zwingend durch eine Amino- oder Hydroxygruppe substituiert ist und R, Z und Y wie in Anspruch 1 definiert sind, umsetzt, oder daß man eine Amino-Azoverbindung der allgemeinen Formel (6)

$$X - SO_2 - A - N = N - W - \underset{\displaystyle R}{\underset{|}{N}} - H \qquad (6)$$

in welcher X, A, W und R wie in Anspruch 1 definiert sind, mit einem aromatischen Isocyanat der allgemeinen Formel (4)

$Y–SO_2–Z–NCO$ (4)

in welcher Y und Z wie in Anspruch 1 definiert sind, oder mit einem aromatischen Carbamidsäurederivat der allgemeinen Formel (5)

$Y–SO_2–Z–NH–CO–B$ (5)

in welcher B ein Chloratom oder eine Phenoxygruppe ist und Z und Y wie in Anspruch 1 definiert sind, umsetzt.

20. Ein Verfahren zur Herstellung eines Kupfer-, Chrom-, Kobalt- oder Nickelmetallkomplex-Farbstoffes eines wie in Anspruch 1 definierten, wasserlöslichen Monoazofarbstoffes der allgemeinen Formel (1), dadurch gekennzeichnet, daß man einen metallfreien Farbstoff der in Anspruch 1 definierten allgemeinen Formel (1), in welcher jedoch sowohl A als auch W in ortho-Stellung zur Azogruppe einen Substituenten enthalten, der zur Metallkomplex-Bildung befähigt ist oder in eine solche Gruppe übergeführt werden kann, mit einem kupfer-, chrom-, kobalt- oder nickel-liefernden Agenz umsetzt, oder daß man eine Kupfer-, Chrom-, Kobalt- oder Nickelkomplex-Aminoazoverbindung der in Anspruch 19 definierten allgemeinen Formel (6) mit einem aromatischen Isocyanat der in Anspruch 19 definierten allgemeinen Formel (4) oder mit einem aromatischen Carbaminsäurederivat der in Anspruch 19 definierten allgemeinen Formel (5) umsetzt.

**Revendications**

1. Composé de formule générale (1)

$$X - SO_2 - A - N = N - W - \underset{\substack{| \\ R}}{N} - CO - NH - Z - SO_2 - Y \quad (1)$$

dans laquelle:

X et Y, indépendamment l'un de l'autre, sont choisis parmi les radicaux vinyle, β-thiosulfatoéthyle, β-bromoéthyle, β-acétyloxyéthyle, β-hydroxyéthyle, β-phosphatoéthyle, β-méthylsulfonyloxyéthyle, β-phénoxyéthyle, β-sulfatoéthyle, β-chloroéthyle, β-phénylsulfonyloxy-éthyle, et un groupe de formule $-CH_2-CH_2-NR^1R^2$,

dans lequel $R^1$ et $R^2$, indépendamment l'un de l'autre, sont choisis parmi l'hydrogène, les radicaux alkyle ayant de 1 à 4 atomes de carbone et les radicaux alkyle sulfosubstitués ayant de 1 à 4 atomes de carbone;

R est un hydrogène, un radical alkyle ayant de 1 à 4 atomes de carbone ou un radical alkyle sulfosubstitué ayant de 1 à 4 atomes de carbone;

A est un radical phénylène ou naphtylène, facultativement substitué par un groupe hydroxy, un halogène, un radical alkyle ayant de 1 à 4 atomes de carbone, alcoxy ayant de 1 à 4 atomes de carbone, carboxy et/ou sulfo;

W est un radical phénylène ou naphtylène facultativement substitué par un radical carboxy, sulfo, amino, carbamoyle non-substitué ou monosubstitué ou disubstitué par 1 ou 2 radicaux alkyle ayant de 1 à 4 atomes de carbone, phényle et/ou phényl-(alkyle ayant de 1 à 4 atomes de carbone), sulfamoyle non-substitué, ou mono- ou disubstitué par un ou deux radicaux alkyle ayant de 1 à 4 atomes de carbone, phényle et/ou phényl-(alkyle ayant de 1 à 4 atomes de carbone), alkyle ayant de 1 à 4 atomes de carbone, alcoxy ayant de 1 à 4 atomes de carbone, hydroxy et/ou halogéno, dont le groupe hydroxy ou amino, s'il existe, est lié en W, en position ortho ou para par rapport au groupe azoïque,

Z est un radical phénylène facultativement substitué par un halogène, un radical alcoxy ayant de 1 à 4 atomes de carbone et/ou alkyle ayant de 1 à 4 atomes de carbone.

2. Composé selon la revendication 1, dans lequel

A est un phénylène non-substitué, ou substitué par 1 ou 2 substituants choisis dans le groupe comprenant les radicaux hydroxy, halogéno, alkyle ayant de 1 à 4 atomes de carbone, alcoxy ayant de 1 à 4 atomes de carbone, carboxy et sulfo, et

W est un phénylène non-substitué, ou substitué par 1 ou 2 substituants choisis dans le groupe de substituants comprenant les radicaux sulfo, sulfamoyle, carbamoyle, sulfamoyle mono- ou disubstitué par 1 ou 2 radicaux alkyle ayant de 1 à 4 atomes de carbone, phényle ou phényl-(alkyle ayant de 1 à 4 atomes de carbone), carbamoyle mono- ou disubstitué par 1 ou 2 radicaux alkyle ayant de 1 à 4 atomes de carbone, phényle, ou phényl-(alkyle ayant de 1 à 4 atomes de carbone), amino, carboxy, alkyle ayant de 1 à 4 atomes de carbone, alcoxy ayant de 1 à 4 atomes de carbone, hydroxy et halogéno, dont le groupe hydroxy ou amino, s'il est présent, et de préférence obligatoirement présent, est en position ortho ou para par rapport au groupe azoïque, ou dans laquelle:

A est un phénylène non-substitué, ou substitué par 1 ou 2 substituants choisis dans le groupe comprenant les radicaux hydroxy, halogéno, alkyle ayant de 1 à 4 atomes de carbone, alcoxy ayant de 1 à 4 atomes de carbone, carboxy et sulfo, et

W est un naphtylène non-substitué, ou substitué par 1, 2 ou 3 substituants choisis dans le groupe de substituants comprenant les radicaux sulfo, sulfamoyle, carbamoyle, sulfamoyle mono- ou disubstitué par 1 ou 2 radicaux alkyle ayant de 1 à 4 atomes de carbone, phényle ou phényl-(alkyle ayant de 1 à 4 atomes de carbone), carbamoyle mono- ou disubstitué par 1 ou 2 radicaux alkyle ayant de 1 à 4 atomes de carbone, phényle, ou phényl-(alkyle ayant de 1 à 4 atomes de carbone), amino, alkyle ayant de 1 à 4 atomes de carbone, alcoxy ayant de 1 à 4 atomes de carbone, hydroxy et halogéno, dont le groupe hydroxy ou amino, s'il est présent, et de préférence obligatoirement présent, est en position ortho ou para par rapport au groupe azoïque, ou dans laquelle:

A est un naphtylène non-substitué, ou substitué par 1, 2 ou 3 substituants choisis dans le groupe comprenant les radicaux hydroxy, halogéno, alkyle ayant de 1 à 4 atomes de carbone, alcoxy ayant de 1 à 4 atomes de carbone, carboxy et sulfo, et

W est un phénylène non-substitué, ou substitué par 1 ou 2 substituants choisis dans le groupe de substituants comprenant les radicaux sulfo, sulfamoyle, carbamoyle, sulfamoyle mono- ou disubstitué par 1 ou 2 radicaux alkyle ayant de 1 à 4 atomes de carbone, phényle ou phényl-(alkyle ayant de 1 à 4 atomes de carbone), carbamoyle mono- ou disubstitué par 1 ou 2 radicaux alkyle ayant de 1 à 4 atomes de carbone, phényle, ou phényl-(alkyle ayant de 1 à 4 atomes de carbone), amino, carboxy, alkyle ayant de 1 à 4 atomes de carbone, alcoxy ayant de 1 à 4 atomes de carbone, hydroxy et halogéno, dont le groupe hydroxy ou amino, s'il est présent, et de préférence obligatoirement présent, est en position ortho ou para par rapport au groupe azoïque, ou dans laquelle:

A est un naphtylène non-substitué, ou substitué par 1, 2 ou 3 substituants choisis dans le groupe comprenant les radicaux hydroxy, halogéno, alkyle ayant de 1 à 4 atomes de carbone, alcoxy ayant de 1 à 4 atomes de carbone, carboxy et sulfo, et

W est un naphtylène non-substitué, ou substitué par 1, 2 ou 3 substituants choisis dans le groupe de substituants comprenant les radicaux sulfo, sulfamoyle, carbamoyle, sulfamoyle mono- ou disubstitué par 1 ou 2 radicaux alkyle ayant de 1 à 4 atomes de carbone, phényle ou phényl-(alkyle ayant de 1 à 4 atomes de carbone), carbamoyle mono- ou disubstitué par 1 ou 2 radicaux alkyle ayant de 1 à 4 atomes de carbone, phényle, ou phényl-(alkyle ayant de 1 à 4 atomes de carbone), amino, carboxy, alkyle ayant de 1 à 4 atomes de carbone, alcoxy ayant de 1 à 4 atomes de carbone, hydroxy et halogéno, dont le groupe hydroxy ou amino, s'il est présent, et de préférence obligatoirement présent, est en position ortho ou para par rapport au groupe azoïque.

3. Composé complexe de cuivre, de nickel, de chrome ou de cobalt d'un composé selon les revendications 1 ou 2.

4. Composé selon la revendication 1, de formule générale (1a)

$$X\text{-}SO_2 - A - N{=}N - \overset{OH}{\overset{|}{W^*}} - \underset{R}{\underset{|}{N}}-CO\text{-}NH - Z - SO_2\text{-}Y$$

dans laquelle X, R, Z et Y sont tels que définis dans la revendication 1, et A est un radical phénylène, non-substitué ou substitué par 1 ou 2 substituants choisis dans le groupe comprenant les halogènes, les radicaux alkyle ayant de 1 à 4 atomes de carbone, alcoxy ayant de 1 à 4 atomes de carbone, carboxy et sulfo, et W* est un noyau naphtalène auquel le groupe hydroxy est lié en position ortho par rapport au groupe azoïque, et qui est substitué par 1 ou 2 groupes sulfo.

5. Colorant à complexe de cuivre 1:1, de chrome 1:2 ou de cobalt 1:2 selon la revendication 3, d'un composé de formule générale (1c):

$$X - SO_2 - \overset{OH}{\overset{|}{A^*}} - N = N - \overset{OH}{\overset{|}{W^*}} - \underset{R}{\underset{|}{N}} - CO - NH - Z - SO_2 - Y$$

dans laquelle X, R, Z et Y sont tels que définis dans la revendication 1, A* est un noyau benzénique non-substitué ou substitué par 1 ou 2, de préférence 1, substituants choisis dans le groupe comprenant les halogènes, les radicaux alkyle ayant de 1 à 4 atomes de carbone, alcoxy ayant de 1 à 4 atomes de carbone, carboxy et sulfo ou est un noyau naphtalène nonsubstitué ou substitué par 1 ou 2 groupes sulfo, et le groupe hydroxy qui est capable de former un complexe métallifère est lié à A* en position ortho par rapport au groupe azoïque, et W* est un noyau naphtalénique qui est substitué par 1 ou 2 substituants, et le groupe hydroxy qui est capable de former un complexe métallifère est lié à W* en position ortho par rapport au groupe azoïque.

6. Colorant selon au moins l'une des revendications 1 à 5, dans lequel X est le radical p-sulfatoéthyle et Y est le radical γ-chloroéthyle.

7. Colorant selon au moins l'une des revendications 1 à 5, dans laquelle X et Y représentent chacun le radical vinyle.

8. Colorant selon la revendication 1, de formule

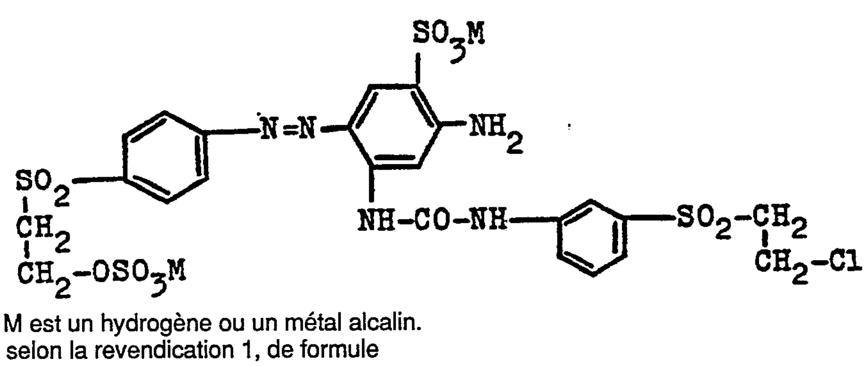

dans laquelle M est un hydrogène ou un métal alcalin.

9. Colorant selon la revendication 1, de formule

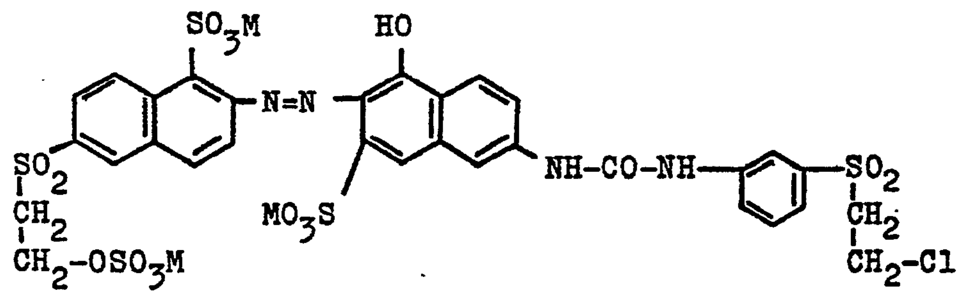

dans laquelle M est un hydrogène ou un métal alcalin.

10. Colorant selon la revendication 1, de formule

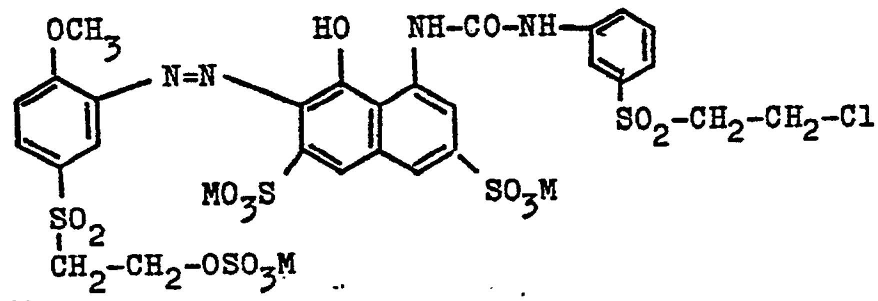

dans laquelle M est un hydrogène ou un métal alcalin.

11. Colorant selon la revendication 4, de formule

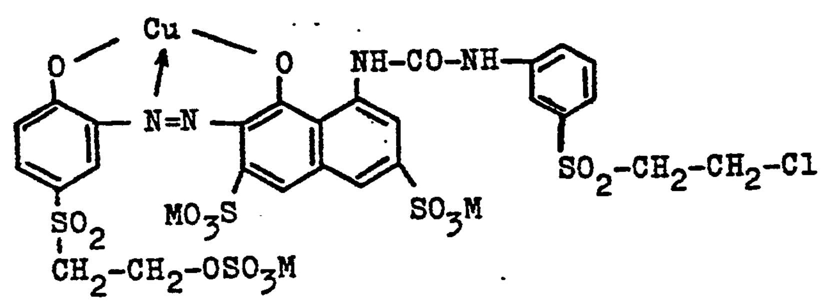

dans laquelle M est un hydrogène ou un métal alcalin.

12. Colorant selon la revendication 1, de formule

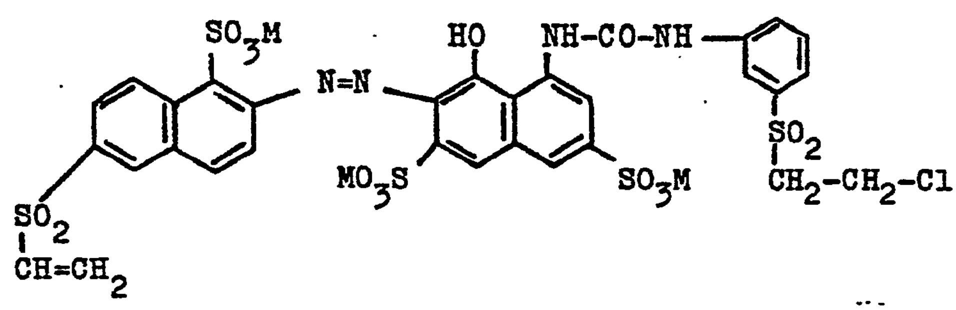

dans laquelle M est un hydrogène ou un métal alcalin.

13. Colorant selon la revendication 4, de formule

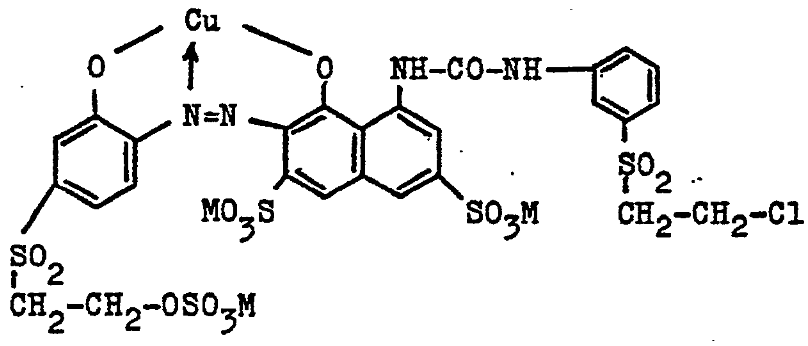

dans laquelle M est un hydrogène ou un métal alcalin.

14. Colorant selon la revendication 1, de formule

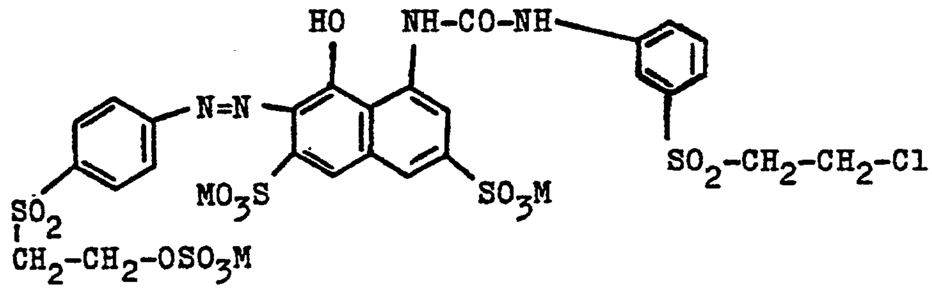

dans laquelle M est un hydrogène ou un métal alcalin.

15. Colorant selon la revendication 1, de formule

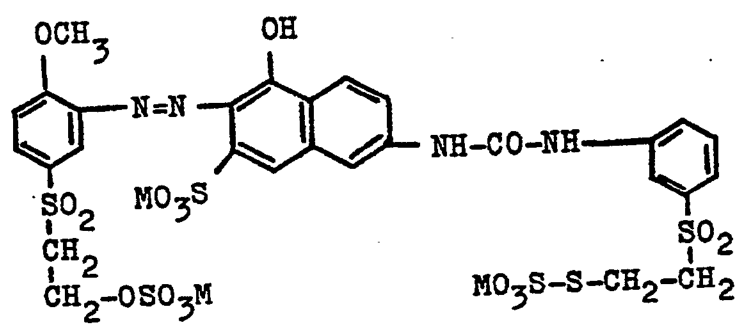

dans laquelle M est un hydrogène ou un métal alcalin.

16. Colorant selon la revendication 1, de formule

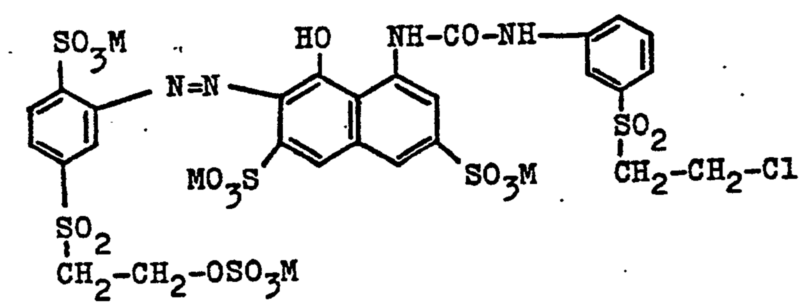

dans laquelle M est un hydrogène ou un métal alcalin.

17. Utilisation d'un colorant selon au moins l'une des revendications 1 à 16 pour colorer (par teinture ou impression) une matière fibreuse contenant des groupes hydroxy et/ou carboxamido.

18. Procédé pour colorer des matières fibreuses contenant des groupes hydroxy et/ou carboxamido, qui consiste à appliquer sur lesdites fibres un colorant et à fixer le colorant sur les fibres à une température comprise entre environ la température ambiante et environ 230°C, en l'absence ou en présence d'un agent ayant une réaction alcaline, l'amélioration consistant à utiliser comme colorant un colorant selon au moins l'une des revendications 1 à 16.

19. Procédé pour préparer un colorant monoazoïque soluble dans l'eau de formule générale (1) telle que définie dans la revendication 1, qui consiste à diazoter un composé aminé de formule générale (2)

$X-SO_2-A-NH_2$ (2)

dans laquelle A et X sont tels que définis dans la revendication 1, et à faire réagir le sel de diazonium avec un composé de copulation de formule générale (3)

$$H-W^1-\underset{\substack{|\\R}}{N}-CO-NH-Z-SO_2-Y \quad (3)$$

dans laquelle $W^1$ a l'une des significations de W telles que données dans la revendication 1 et est obligatoirement substitué par un groupe amino ou hydroxy, et R, Z et Y sont tels que définis dans la revendication 1, ou à faire réagir un composé amino-azoïque de formule générale (6),

$$X-SO_2-A-N=N-W-\underset{\substack{|\\R}}{N}-H \quad (6)$$

dans laquelle X, A, W et R sont tels que définis dans la revendication 1, avec un isocyanate aromatique de formule générale (4)

$Y-SO_2-Z-NCO$ (4)

dans laquelle Y et Z sont tels que définis dans la revendication 1, ou avec un dérivé aromatique de l'acide carbamique de formule générale (5)

$Y-SO_2-Z-NH-CO-B$ (5)

dans laquelle B est un atome de chlore ou un groupe phénoxy, et Z et Y sont tels que définis dans la revendication 1.

20. Procédé pour préparer un colorant à complexe métallifère à base de cuivre, de chrome, de cobalt ou de nickel, d'un colorant monoazoïque soluble dans l'eau de formule générale (1) telle que définie dans la revendication 1, qui consiste à faire réagir un colorant non-métallé de formule générale (1) selon la revendication 1, mais où A et W contiennent sur leurs positions ortho par rapport au groupe azoïque un substituant qui soit capable de former un complexe métallifère ou d'être converti en un tel groupe, avec un agent cédant du cuivre, du chrome, du cobalt ou du nickel, ou à faire réagir un composé aminoazoïque d'un complexe métallifère à base de cuivre, de chrome, de cobalt ou de nickel de formule générale (6) selon la revendication 19, avec un isocyanate aromatique de formule générale (4) définie dans la revendication 19, ou encore avec un dérivé aromatique de l'acide carbamique, de formule générale (5) selon la revendication 19.